# EUROPEAN PATENT APPLICATION

(11) **EP 4 807 508 A1**
(43) Date of publication of application: **16.09.2026**
(21) Application number: 25777225.1
(22) Date of filing: 05.02.2025
(51) Int. Cl.: G06F 3/04812

(54) **CURSOR CONTROL METHOD, ELECTRONIC DEVICE, AND SYSTEM**

(30) Priority: 28.03.2024 CN 202410377404
(71) Applicant: Huawei Technologies Co., Ltd., Shenzhen, Guangdong 518129 (CN)
(72) Inventor: XU, Haowei, Shenzhen, Guangdong 518129 (CN); ZHAO, Xuewen, Shenzhen, Guangdong 518129 (CN); HU, Zhengyuan, Shenzhen, Guangdong 518129 (CN); WANG, Guangde, Shenzhen, Guangdong 518129 (CN)
(74) Representative: Huawei European IPR
(86) International application number: PCT/CN2025/075751
(87) International publication number: WO 2025/200779

(57) **Abstract**

This application provides a cursor control method, including: When a distance between a first pointing device and a first display is a first distance, in response to controlling, by using the first pointing device, a pointing position to move by a first amplitude, a cursor synchronously moves on the first display by a second amplitude, where the first amplitude is greater than the second amplitude, and the pointing position is a position that the first pointing device points to on the first display; and when the distance between the first pointing device and the first display is changed to a second distance, in response to controlling, by using the first pointing device, the pointing position to move by a third amplitude, the cursor synchronously moves on the first display by the second amplitude, where the third amplitude is greater than the first amplitude, and the second distance is greater than the first distance. According to the method, a jitter reduction effect of the cursor can be adaptively adjusted based on the distance between the pointing device and the display, thereby improving user experience.

## Description

This application claims priority to Chinese Patent Application No. 202410377404.6, filed with the China National Intellectual Property Administration on March 28, 2024 and entitled "CURSOR CONTROL METHOD, ELECTRONIC DEVICE, AND SYSTEM", which is incorporated herein by reference in its entirety.

### TECHNICAL FIELD

This application relates to the field of cursor control, and more specifically, to a cursor control method, an electronic device, and a system.

### BACKGROUND

A pointing remote control achieves a remote control effect by controlling a cursor to move on a large screen, so that interaction experience between a user and the large screen can be improved. For example, the user may play a shooting game and a fruit-cutting game on the large screen by using the pointing remote control. During use of the pointing remote control, sensitivity of cursor movement gradually increases as a usage distance increases. In other words, given a same posture change of the pointing remote control, a longer distance between the remote control and the large screen indicates a larger movement range of the cursor.

Therefore, when the user uses the large screen at a relatively long distance, a slight hand jitter may cause the cursor to move within a large range. When an area of a target widget to which the cursor moves is relatively small, it is difficult to control the cursor to accurately move to the target widget. Consequently, the user cannot smoothly use the pointing remote control to control the cursor to perform a fine operation within a small range, such as drawing and document annotation, and user experience is severely affected.

### SUMMARY

This application provides a cursor control method, an electronic device, and a system. The method, electronic device, and system can be used to adaptively adjust a jitter reduction effect of a cursor based on a distance between a pointing device and a display, to improve user experience.

According to a first aspect, a cursor control method is provided. The method includes: when a distance between a first pointing device and a first display is a first distance, controlling, by using the first pointing device, a pointing position to move by a first amplitude, so that a cursor synchronously moves on the first display by a second amplitude, where the first amplitude is greater than the second amplitude, and the pointing position is a position that the first pointing device points to on the first display; and when the distance between the first pointing device and the first display is changed to a second distance, controlling, by using the first pointing device, the pointing position to move by a third amplitude, so that the cursor synchronously moves on the first display by the second amplitude, where the third amplitude is greater than the first amplitude, and the second distance is greater than the first distance. The pointing position of the first pointing device includes a position that the first pointing device intends to point to on the first display. The first amplitude may be an amplitude of movement across the display by a user using the first pointing device.

In some embodiments, the first pointing device is a remote control, or may be a mobile phone having a pointing function, or may be another device having a pointing function. This is not limited in this application.

In some embodiments, the first distance may be a first distance range, and the second distance may be a second distance range, where a minimum distance value within the second distance range is greater than a maximum distance value within the first distance range.

In some embodiments, the first amplitude, the second amplitude, and the third amplitude may all be distance magnitudes or may all be angular magnitudes.

The pointing position may also be described as a position of an intersection point between a direction pointed to by the first pointing device and the first display.

In this embodiment of this application, a spatial relationship between the pointing device and an interactive large screen can be sensed in real time by using a space sensing capability of the pointing device, and sensitivity of the cursor can be adaptively adjusted based on a distance between the pointing device and the large screen. Further, a jitter reduction effect of the cursor can be adaptively adjusted based on the distance between the pointing device and the large screen.

With reference to the first aspect, in a possible implementation, the method further includes: when the pointing position moves on the first display, determining a damping coefficient based on the distance between the first pointing device and the first display, where the damping coefficient is negatively correlated with the distance between the first pointing device and the first display; and adjusting a display position of the cursor based on the damping coefficient.

In some embodiments, the damping coefficient is greater than 0, and the damping coefficient is less than or equal to 1.

In this embodiment of this application, the spatial relationship between the pointing device and the interactive large screen can be sensed in real time by using the space sensing capability of the pointing device, and the damping coefficient of the cursor can be adaptively adjusted based on the distance between the pointing device and the large screen. Further, sensitivity of the cursor is adjusted, and the jitter reduction effect of the cursor can be adaptively adjusted based on the distance between the pointing device and the large screen, so that the user can experience cursor movement without jitter by using the remote control at any position.

With reference to the first aspect, in a possible implementation, determining the damping coefficient based on the distance between the first pointing device and the first display includes: determining, based on a distance corresponding to an i^{th} frame, a damping coefficient corresponding to the i^{th} frame, where the distance corresponding to the i^{th} frame is a distance that is between the first pointing device and the first display and that corresponds to the i^{th} frame, i is a natural number, and i=1, 2, 3, ...; and adjusting the display position of the cursor based on the damping coefficient includes: determining an x variable corresponding to the i^{th} frame and a y variable corresponding to the i^{th} frame, where the x variable corresponding to the i^{th} frame is a variation of a lateral coordinate of a pointing position corresponding to the i^{th} frame relative to a lateral coordinate of a pointing position corresponding to an (i-1)^{th} frame, and the y variable corresponding to the i^{th} frame is a variation of a longitudinal coordinate of the pointing position corresponding to the i^{th} frame relative to a longitudinal coordinate of the pointing position corresponding to the (i-1)^{th} frame; and determining, based on the damping coefficient corresponding to the i^{th} frame, cursor coordinates corresponding to the (i-1)^{th} frame, the x variable corresponding to the i^{th} frame, and the y variable corresponding to the i^{th} frame, cursor coordinates corresponding to the i^{th} frame, where the cursor coordinates corresponding to the i^{th} frame are used to display the cursor corresponding to the i^{th} frame on the first display.

In some embodiments, determining, based on the damping coefficient corresponding to the i^{th} frame, the cursor coordinates corresponding to the (i-1)^{th} frame, the x variable corresponding to the i^{th} frame, and the y variable corresponding to the i^{th} frame, the cursor coordinates corresponding to the i^{th} frame includes: determining that a sum of a first product and the lateral coordinate of the cursor coordinates corresponding to the (i-1)^{th} frame is the lateral coordinate of the cursor coordinates corresponding to the i^{th} frame, where the first product is a product of the damping coefficient corresponding to the i^{th} frame and the x variable corresponding to the i^{th} frame; and determining that a sum of a second product and the longitudinal coordinate of the cursor coordinates corresponding to the (i-1)^{th} frame is the longitudinal coordinate of the cursor coordinates corresponding to the i^{th} frame, where the second product is a product of the damping coefficient corresponding to the i^{th} frame and the y variable corresponding to the i^{th} frame.

In this embodiment of this application, the spatial relationship between the pointing device and the interactive large screen can be sensed in real time by using the space sensing capability of the pointing device, the damping coefficient of the cursor can be adaptively adjusted based on the distance between the pointing device and the large screen, and the display position of the cursor is adjusted based on the adjusted damping coefficient. Further, the jitter reduction effect of the cursor can be adaptively adjusted based on the distance between the pointing device and the large screen, so that the user can experience cursor movement without jitter by using the remote control at any position.

With reference to the first aspect, in a possible implementation, determining the damping coefficient based on the distance between the first pointing device and the first display includes: determining the damping coefficient based on the distance between the first pointing device and the first display and a posture variation of the first pointing device, where the damping coefficient is positively correlated with the posture variation of the first pointing device.

In this embodiment of this application, the spatial relationship between the pointing device and the interactive large screen can be sensed in real time by using the space sensing capability of the pointing device, and the damping coefficient of the cursor can be adaptively adjusted based on the distance between the pointing device and the large screen and a posture change of the pointing device. Further, sensitivity of the cursor is adjusted, and the jitter reduction effect of the cursor can be adaptively adjusted based on the distance between the pointing device and the large screen and the posture change of the pointing device. In this way, the user can experience cursor movement by a small amplitude without jitter and cursor movement by a large amplitude without delay by using the remote control at any position. Because when the user performs fine pointing selection, the user generally moves close to a widget quickly, and then makes a slow adjustment to select the widget accurately, the method can be well applicable to a scenario in which the user performs a fine operation on the large screen.

With reference to the first aspect, in a possible implementation, determining the damping coefficient based on the distance between the first pointing device and the first display and the posture variation of the first pointing device includes: determining, based on the distance corresponding to the i^{th} frame and a first posture variation corresponding to the i^{th} frame, a first damping coefficient corresponding to the i^{th} frame; and determining, based on the distance corresponding to the i^{th} frame and a second posture variation corresponding to the i^{th} frame, a second damping coefficient corresponding to the i^{th} frame, where the distance corresponding to the i^{th} frame is the distance that is between the first pointing device and the first display and that corresponds to the i^{th} frame, i is a natural number, and i=1, 2, 3, ...; and adjusting the display position of the cursor based on the damping coefficient includes: determining the x variable corresponding to the i^{th} frame and the y variable corresponding to the i^{th} frame, where the x variable corresponding to the i^{th} frame is the variation of the lateral coordinate of the pointing position corresponding to the i^{th} frame relative to the lateral coordinate of the pointing position corresponding to the (i-1)^{th} frame, and the y variable corresponding to the i^{th} frame is the variation of the longitudinal coordinate of the pointing position corresponding to the i^{th} frame relative to the longitudinal coordinate of the pointing position corresponding to the (i-1)th frame; and determining, based on the first damping coefficient corresponding to the i^{th} frame, the second damping coefficient corresponding to the i^{th} frame, the cursor coordinates corresponding to the (i-1)^{th} frame, the x variable corresponding to the i^{th} frame, and the y variable corresponding to the i^{th} frame, the cursor coordinates corresponding to the i^{th} frame, where the cursor coordinates corresponding to the i^{th} frame are used to display the cursor corresponding to the i^{th} frame on the first display.

In some embodiments, the first posture variation corresponding to the i^{th} frame includes a variation of a yaw angle of the first pointing device relative to a posture corresponding to the (i-1)^{th} frame, and the second posture variation corresponding to the i^{th} frame includes a variation of a pitch angle of the first pointing device relative to the posture corresponding to the (i-1)^{th} frame.

In some embodiments, determining, based on the first damping coefficient corresponding to the i^{th} frame, the second damping coefficient corresponding to the i^{th} frame, the cursor coordinates corresponding to the (i-1)^{th} frame, the x variable corresponding to the i^{th} frame, and the y variable corresponding to the i^{th} frame, the cursor coordinates corresponding to the i^{th} frame includes: determining that a sum of a third product and the lateral coordinate of the cursor coordinates corresponding to the (i-1)^{th} frame is the lateral coordinate of the cursor coordinates corresponding to the i^{th} frame, where the third product is a product of the first damping coefficient corresponding to the i^{th} frame and the x variable corresponding to the i^{th} frame; and determining that a sum of a fourth product and the longitudinal coordinate of the cursor coordinates corresponding to the (i-1)^{th} frame is the longitudinal coordinate of the cursor coordinates corresponding to the i^{th} frame, where the fourth product is a product of the second damping coefficient corresponding to the i^{th} frame and the y variable corresponding to the i^{th} frame.

In this embodiment of this application, the spatial relationship between the pointing device and the interactive large screen can be sensed in real time by using the space sensing capability of the pointing device, the damping coefficient of the cursor can be adaptively adjusted based on the distance between the pointing device and the large screen and the posture change of the pointing device, and the display position of the cursor is adjusted based on the adjusted damping coefficient, so that the jitter reduction effect of the cursor can be adaptively adjusted based on the distance between the pointing device and the large screen and the posture change of the pointing device. In this way, the user can experience cursor movement by a small amplitude without jitter and cursor movement by a large amplitude without delay by using the remote control at any position. Because when the user performs fine pointing selection, the user generally moves close to a widget quickly, and then makes a slow adjustment to select the widget accurately, the method can be well applicable to a scenario in which the user performs a fine operation on the large screen.

With reference to the first aspect, in a possible implementation, the method further includes: when the pointing position moves on the first display, determining a position and a posture of the first pointing device in real time, where the position of the first pointing device is used to obtain the distance between the first pointing device and the first display, and the posture of the first pointing device is used to obtain the posture variation of the first pointing device.

According to a second aspect, a cursor control method is provided. The method includes: When a distance between a first pointing device and a first display is a first distance, in response to controlling, by using the first pointing device, a pointing position to move by a first amplitude, a cursor synchronously moves on the first display by a second amplitude, where the first amplitude is greater than the second amplitude, and the pointing position is a position that the first pointing device points to on the first display; and when the distance between the first pointing device and the first display is changed to a second distance, in response to controlling, by using the first pointing device, the pointing position to move by a third amplitude, the cursor synchronously moves on the first display by the second amplitude, where the third amplitude is greater than the first amplitude, and the second distance is greater than the first distance.

In some embodiments, the first display is a display of a large-screen device.

In some embodiments, the first amplitude, the second amplitude, and the third amplitude may all be distance magnitudes or may all be angular magnitudes.

The pointing position may also be described as a position of an intersection point between a direction pointed to by the first pointing device and the first display.

In this embodiment of this application, a spatial relationship between the pointing device and an interactive large screen can be sensed in real time by using a space sensing capability of the pointing device, and sensitivity of the cursor can be adaptively adjusted based on a distance between the pointing device and the large screen. Further, a jitter reduction effect of the cursor can be adaptively adjusted based on the distance between the pointing device and the large screen.

According to a third aspect, a cursor control system is provided. The system includes a first pointing device and a first display, where the first pointing device is configured to: when a distance between the first pointing device and the first display is a first distance, control a pointing position to move by a first amplitude, where the pointing position is a position that the first pointing device points to on the first display; the first display is configured to: in response to the movement of the pointing position by the first amplitude, control a cursor to synchronously move on the first display by a second amplitude, where the first amplitude is greater than the second amplitude; the first pointing device is further configured to: when the distance between the first pointing device and the first display is a second distance, control the pointing position to move on the first display by a third amplitude; and the first display is further configured to: in response to the movement of the pointing position within a third display range of the first display, control the cursor to synchronously move on the first display by the second amplitude, where the third amplitude is greater than the first amplitude, and the second distance is greater than the first distance.

In some embodiments, the first pointing device is a remote control, or may be a mobile phone having a pointing function, or may be another device having a pointing function. This is not limited in this application.

In some embodiments, the first display is a display of a large-screen device.

In some embodiments, the first amplitude, the second amplitude, and the third amplitude may all be distance magnitudes or may all be angular magnitudes.

The pointing position may also be described as a position of an intersection point between a direction pointed to by the first pointing device and the first display.

In this embodiment of this application, a spatial relationship between the pointing device and an interactive large screen can be sensed in real time by using a space sensing capability of the pointing device, and sensitivity of the cursor can be adaptively adjusted based on a distance between the pointing device and the large screen. Further, a jitter reduction effect of the cursor can be adaptively adjusted based on the distance between the pointing device and the large screen.

With reference to the third aspect, in a possible implementation, the first pointing device is specifically configured to: when the pointing position moves on the first display, determine a damping coefficient based on the distance between the first pointing device and the first display, where the damping coefficient is negatively correlated with the distance between the first pointing device and the first display; and adjust a display position of the cursor based on the damping coefficient.

In some embodiments, the damping coefficient is greater than 0, and the damping coefficient is less than or equal to 1.

In this embodiment of this application, the spatial relationship between the pointing device and the interactive large screen can be sensed in real time by using the space sensing capability of the pointing device, and the damping coefficient of the cursor can be adaptively adjusted based on the distance between the pointing device and the large screen. Further, sensitivity of the cursor is adjusted, and the jitter reduction effect of the cursor can be adaptively adjusted based on the distance between the pointing device and the large screen, so that the user can experience cursor movement without jitter by using the remote control at any position.

With reference to the third aspect, in a possible implementation, the first pointing device is specifically configured to: determine, based on a distance corresponding to an i^{th} frame, a damping coefficient corresponding to the i^{th} frame, where the distance corresponding to the i^{th} frame is a distance that is between the first pointing device and the first display and that corresponds to the i^{th} frame, i is a natural number, and i=1, 2, 3, ...; determine an x variable corresponding to the i^{th} frame and a y variable corresponding to the i^{th} frame, where the x variable corresponding to the i^{th} frame is a variation of a lateral coordinate of a pointing position corresponding to the i^{th} frame relative to a lateral coordinate of a pointing position corresponding to an (i-1)^{th} frame, and the y variable corresponding to the i^{th} frame is a variation of a longitudinal coordinate of the pointing position corresponding to the i^{th} frame relative to a longitudinal coordinate of the pointing position corresponding to the (i-1)^{th} frame; and determine, based on the damping coefficient corresponding to the i^{th} frame, cursor coordinates corresponding to the (i-1)^{th} frame, the x variable corresponding to the i^{th} frame, and the y variable corresponding to the i^{th} frame, cursor coordinates corresponding to the i^{th} frame; and the first display is specifically configured to: display, based on the cursor coordinates corresponding to the i^{th} frame, the cursor corresponding to the i^{th} frame on the first display.

In some embodiments, the first pointing device is specifically configured to: determine that a sum of a first product and the lateral coordinate of the cursor coordinates corresponding to the (i-1)^{th} frame is the lateral coordinate of the cursor coordinates corresponding to the i^{th} frame, where the first product is a product of the damping coefficient corresponding to the i^{th} frame and the x variable corresponding to the i^{th} frame; and determine that a sum of a second product and the longitudinal coordinate of the cursor coordinates corresponding to the (i-1)^{th} frame is the longitudinal coordinate of the cursor coordinates corresponding to the i^{th} frame, where the second product is a product of the damping coefficient corresponding to the i^{th} frame and the y variable corresponding to the i^{th} frame.

In this embodiment of this application, the spatial relationship between the pointing device and the interactive large screen can be sensed in real time by using the space sensing capability of the pointing device, the damping coefficient of the cursor can be adaptively adjusted based on the distance between the pointing device and the large screen, and the display position of the cursor is adjusted based on the adjusted damping coefficient. Further, the jitter reduction effect of the cursor can be adaptively adjusted based on the distance between the pointing device and the large screen, so that the user can experience cursor movement without jitter by using the remote control at any position.

With reference to the third aspect, in a possible implementation, the first pointing device is specifically configured to: determine the damping coefficient based on the distance between the first pointing device and the first display and a posture variation of the first pointing device, where the damping coefficient is positively correlated with the posture variation of the first pointing device.

In this embodiment of this application, the spatial relationship between the pointing device and the interactive large screen can be sensed in real time by using the space sensing capability of the pointing device, and the damping coefficient of the cursor can be adaptively adjusted based on the distance between the pointing device and the large screen and a posture change of the pointing device. Further, sensitivity of the cursor is adjusted, and the jitter reduction effect of the cursor can be adaptively adjusted based on the distance between the pointing device and the large screen and the posture change of the pointing device. In this way, the user can experience cursor movement by a small amplitude without jitter and cursor movement by a large amplitude without delay by using the remote control at any position. Because when the user performs fine pointing selection, the user generally moves close to a widget quickly, and then makes a slow adjustment to select the widget accurately, the method can be well applicable to a scenario in which the user performs a fine operation on the large screen.

With reference to the third aspect, in a possible implementation, the first pointing device is specifically configured to: determine, based on the distance corresponding to the i^{th} frame and a first posture variation corresponding to the i^{th} frame, a first damping coefficient corresponding to the i^{th} frame; determine, based on the distance corresponding to the i^{th} frame and a second posture variation corresponding to the i^{th} frame, a second damping coefficient corresponding to the i^{th} frame, where the distance corresponding to the i^{th} frame is the distance that is between the first pointing device and the first display and that corresponds to the i^{th} frame, i is a natural number, and i=1, 2, 3, ...; determine the x variable corresponding to the i^{th} frame and the y variable corresponding to the i^{th} frame, where the x variable corresponding to the i^{th} frame is the variation of the lateral coordinate of the pointing position corresponding to the i^{th} frame relative to the lateral coordinate of the pointing position corresponding to the (i-1)^{th} frame, and the y variable corresponding to the i^{th} frame is the variation of the longitudinal coordinate of the pointing position corresponding to the i^{th} frame relative to the longitudinal coordinate of the pointing position corresponding to the (i-1)th frame; and determine, based on the first damping coefficient corresponding to the i^{th} frame, the second damping coefficient corresponding to the i^{th} frame, the cursor coordinates corresponding to the (i-1)^{th} frame, the x variable corresponding to the i^{th} frame, and the y variable corresponding to the i^{th} frame, the cursor coordinates corresponding to the i^{th} frame; and the first display is specifically configured to: display, based on the cursor coordinates corresponding to the i^{th} frame, the cursor corresponding to the i^{th} frame on the first display.

In some embodiments, the first posture variation corresponding to the i^{th} frame includes a variation of a yaw angle of the first pointing device relative to a posture corresponding to the (i-1)^{th} frame, and the second posture variation corresponding to the i^{th} frame includes a variation of a pitch angle of the first pointing device relative to the posture corresponding to the (i-1)^{th} frame.

In some embodiments, the first pointing device is specifically configured to: determine that a sum of a third product and the lateral coordinate of the cursor coordinates corresponding to the (i-1)^{th} frame is the lateral coordinate of the cursor coordinates corresponding to the i^{th} frame, where the third product is a product of the first damping coefficient corresponding to the i^{th} frame and the x variable corresponding to the i^{th} frame; and determine that a sum of a fourth product and the longitudinal coordinate of the cursor coordinates corresponding to the (i-1)^{th} frame is the longitudinal coordinate of the cursor coordinates corresponding to the i^{th} frame, where the fourth product is a product of the second damping coefficient corresponding to the i^{th} frame and the y variable corresponding to the i^{th} frame.

In this embodiment of this application, the spatial relationship between the pointing device and the interactive large screen can be sensed in real time by using the space sensing capability of the pointing device, the damping coefficient of the cursor can be adaptively adjusted based on the distance between the pointing device and the large screen and the posture change of the pointing device, and the display position of the cursor is adjusted based on the adjusted damping coefficient, so that the jitter reduction effect of the cursor can be adaptively adjusted based on the distance between the pointing device and the large screen and the posture change of the pointing device. In this way, the user can experience cursor movement by a small amplitude without jitter and cursor movement by a large amplitude without delay by using the remote control at any position. Because when the user performs fine pointing selection, the user generally moves close to a widget quickly, and then makes a slow adjustment to select the widget accurately, the method can be well applicable to a scenario in which the user performs a fine operation on the large screen.

With reference to the third aspect, in a possible implementation, the first pointing device is specifically configured to: when the pointing position moves on the first display, determine a position and a posture of the first pointing device in real time, where the position of the first pointing device is used to obtain the distance between the first pointing device and the first display, and the posture of the first pointing device is used to obtain the posture variation of the first pointing device.

According to a fourth aspect, an electronic device is provided. The electronic device includes a memory and a processor. The memory is configured to store computer program code. The processor is configured to execute the computer program code stored in the memory, to implement the method according to any one of the first aspect or the possible implementations of the first aspect, or implement the method according to any one of the second aspect or the possible implementations of the second aspect.

According to a fifth aspect, a computer-readable storage medium is provided. The computer-readable storage medium stores a computer program or instructions. When the computer program or the instructions are executed, the method according to any one of the first aspect or the possible implementations of the first aspect is implemented, or the method according to any one of the second aspect or the possible implementations of the second aspect is implemented.

According to a sixth aspect, a chip is provided. The chip stores instructions. When the instructions are run on a device, the chip is enabled to perform the method according to any one of the first aspect or the possible implementations of the first aspect or the method according to any one of the second aspect or the possible implementations of the second aspect.

According to a seventh aspect, a computer program product is provided. The computer program product stores a computer program or instructions. When the computer program or the instructions are executed, the method according to any one of the first aspect or the possible implementations of the first aspect is implemented, or the method according to any one of the second aspect or the possible implementations of the second aspect is implemented.

### BRIEF DESCRIPTION OF DRAWINGS

FIG. 1 is a diagram of a structure of an electronic device according to an embodiment of this application;
FIG. 2 is a diagram of a structure of another electronic device according to an embodiment of this application;
FIG. 3 is a diagram of a structure of another electronic device according to an embodiment of this application;
FIG. 4 shows a usage scenario of a pointing remote control according to an embodiment of this application;
FIG. 5 is a diagram illustrating how sensitivity of cursor movement changes with a usage distance according to an embodiment of this application;
FIG. 6 is a diagram of a scenario in which a pointing remote control performs cursor control at different usage distances according to an embodiment of this application;
FIG. 7 is a diagram of an application scenario corresponding to a solution of this application according to an embodiment of this application;
FIG. 8 is a diagram of an application scenario corresponding to another solution of this application according to an embodiment of this application;
FIG. 9 is a diagram of comparison between a cursor control effect in a solution of this application and a cursor control effect in a conventional solution according to an embodiment of this application;
FIG. 10 is a schematic flowchart of a cursor control method according to an embodiment of this application;
FIG. 11 is a schematic flowchart of another cursor control method according to an embodiment of this application;
FIG. 12 is a schematic flowchart of another cursor control method according to an embodiment of this application;
FIG. 13 is a schematic flowchart of another cursor control method according to an embodiment of this application;
FIG. 14 is an interaction diagram of a cursor control method according to an embodiment of this application;
FIG. 15 is a curve diagram illustrating a relationship between a damping coefficient and a posture variation per frame when a distance between a remote control and a large screen is fixed according to an embodiment of this application;
FIG. 16 is a curve diagram illustrating a relationship between a damping coefficient and a distance from a remote control to a large screen when a posture variation of a remote control per frame is fixed according to an embodiment of this application;
FIG. 17 is a diagram illustrating several position relationships between a large-screen device and a UWB base station according to an embodiment of this application;
FIG. 18 is a diagram illustrating several layouts of a first antenna array according to an embodiment of this application;
FIG. 19 is a layout status diagram of a second antenna array on a remote control according to an embodiment of this application;
FIG. 20 shows a spatial coordinate system established by using a UWB base station as a coordinate origin according to an embodiment of this application;
FIG. 21 shows a spatial coordinate system established by using a center of a remote control as a coordinate origin according to an embodiment of this application;
FIG. 22 is a diagram illustrating a yaw angle ψ, a pitch angle φ, and a roll angle θ that are used to measure a posture of a remote control according to an embodiment of this application; and
FIG. 23 is a diagram illustrating functional modules of a cursor control system according to an embodiment of this application.

### DESCRIPTION OF EMBODIMENTS

The following describes technical solutions of this application with reference to accompanying drawings. It is clear that the described embodiments are merely a part rather than all of embodiments of this application.

The following describes the technical solutions in embodiments of this application with reference to the accompanying drawings in embodiments of this application. In descriptions of embodiments of this application, unless otherwise specified, "/" means "or". For example, A/B may indicate A or B. In this specification, "and/or" describes only an association relationship between associated objects and represents that three relationships may exist. For example, A and/or B may represent the following three cases: Only A exists, both A and B exist, and only B exists. In addition, in the descriptions of embodiments of this application, the term "a plurality of" means two or more.

The terms "first" and "second" mentioned below are intended only for description, and shall not be understood as an indication or implication of relative importance or an implicit indication of a quantity of indicated technical features. Therefore, a feature defined by "first" or "second" may explicitly or implicitly include one or more features. In the descriptions of embodiments, unless otherwise specified, the term "a plurality of" means two or more.

Terms used in the following embodiments are merely intended to describe specific embodiments, but are not intended to limit this application. As used in this specification and the appended claims of this application, terms "one", "a", and "this" expressed in singular forms are also intended to include expressions such as "one or more", unless otherwise explicitly indicated in the context. It should be further understood that, in the following embodiments of this application, "at least one" and "one or more" mean "one, two, or more than two". The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between associated objects.

Reference to "an embodiment", "some embodiments", or the like described in this specification means that a specific feature, structure, or characteristic described with reference to the embodiment is included in one or more embodiments of this application. Therefore, statements such as "an embodiment", "some embodiments", "another embodiment", and "some other embodiments" that appear at different places in this specification do not necessarily refer to a same embodiment, but mean "one or more but not all embodiments", unless otherwise specifically emphasized in another manner. The terms "comprise", "include", and "have", and variants thereof all mean "include but are not limited to", unless otherwise specifically emphasized in another manner.

A method provided in embodiments of this application may be applied to an electronic device such as a mobile phone, a tablet computer, a wearable device, an in-vehicle device, an augmented reality (augmented reality, AR) device or a virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

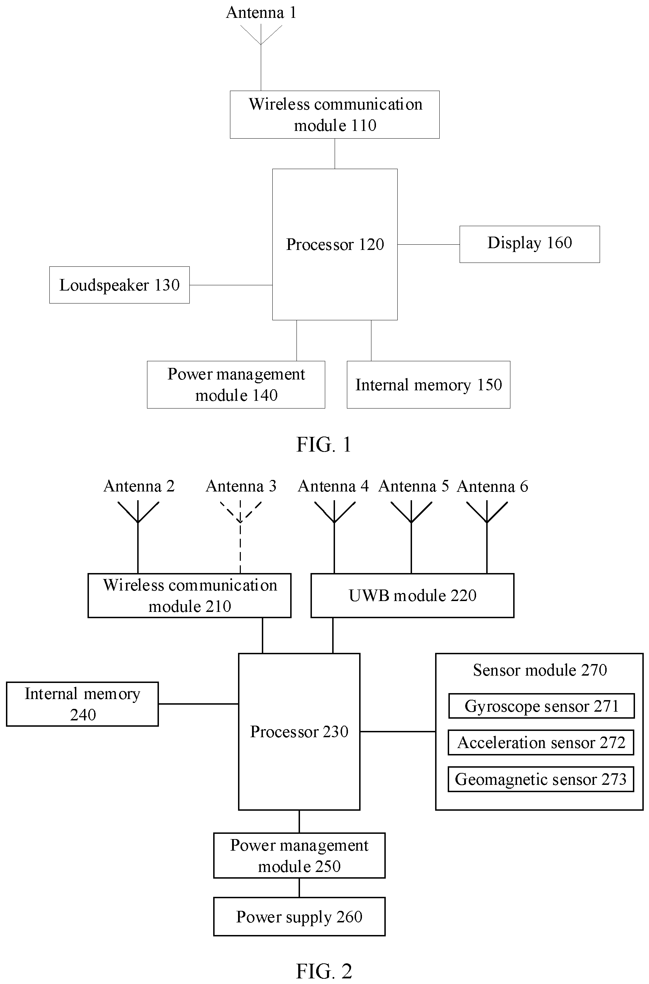

For example, FIG. 1 is a diagram of a structure of an electronic device 100. The electronic device 100 may include a wireless communication module 110, an antenna 1, a processor 120, a loudspeaker 130, a power management module 140, an internal memory 150, a display 160, and the like.

It may be understood that the structure shown in this embodiment of this application does not constitute a specific limitation on the electronic device 100. In some other embodiments of this application, the electronic device 100 may include more or fewer components than those shown in the figure (for example, may further include an external memory interface, a battery, a frequency module, and a sensor module), or some components may be combined, or some components may be split, or different component arrangements may be used. The components shown in the figure may be implemented by hardware, software, or a combination of software and hardware.

The wireless communication module 110 may provide a wireless communication solution including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like and applied to the electronic device 100. The wireless communication module 110 may be one or more components integrating at least one communication processing module. The wireless communication module 110 receives an electromagnetic wave through the antenna 1, performs frequency modulation and filtering processing on an electromagnetic wave signal, and sends the processed signal to the processor 120. The wireless communication module 110 may further receive a to-be-sent signal from the processor 120, perform frequency modulation and amplification on the signal, and convert the signal into an electromagnetic wave for radiation through the antenna 1.

The processor 120 may include one or more processing units. For example, the processor 120 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on instruction operation code and a time sequence signal, to complete control over instruction fetching and instruction execution.

A memory may be further disposed in the processor 120, and is configured to store instructions and data. In some embodiments, the memory in the processor 120 is a cache memory. The memory may store instructions or data just used or cyclically used by the processor 120. If the processor 120 needs to use the instructions or data again, the processor 120 may invoke the instructions or data directly from the memory. This avoids repeated access, reduces waiting time of the processor 120, and improves system efficiency.

In some embodiments, the processor 120 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The antenna 1 is configured to transmit and receive electromagnetic wave signals. Each antenna in the electronic device 100 may be configured to cover one or more communication frequency bands. Different antennas may be further reused to improve antenna utilization. For example, the antenna 1 may be reused as a diversity antenna in a wireless local area network. In some other embodiments, the antenna may be used in combination with a tuning switch.

The loudspeaker 130, also referred to as a "speaker", is configured to convert an electrical audio signal into a sound signal. The electronic device 100 may be used to listen to music or answer a call in hands-free mode by using the loudspeaker 130.

The power management module 140 is configured to connect to the processor 120. The power management module 140 receives an input of a battery and/or a charging management module, and supplies power to the processor 120, the internal memory 150, the loudspeaker 130, the display 160, the wireless communication module 110, and the like. The power management module 140 may be further configured to monitor parameters such as a battery capacity, a battery cycle count, and a battery health status (electric leakage or impedance). In some other embodiments, the power management module 140 may alternatively be disposed in the processor 120. In some other embodiments, the power management module 140 and the charging management module may alternatively be disposed in a same component.

A wireless communication function of the electronic device 100 may be implemented by the antenna 1, the wireless communication module 110, or the like.

The internal memory 150 may be configured to store computer-executable program code, and the executable program code includes instructions. The processor 120 performs various function applications and data processing of the electronic device 100 by running the instructions stored in the internal memory 150. The internal memory 150 may include a program storage area and a data storage area. The program storage area may store an operating system, an App required by at least one function (for example, a sound playing function or an image playing function), and the like. The data storage area may store data (such as audio data and a phone book) created in use of the electronic device 100. In addition, the internal memory 150 may include a high-speed random access memory, and may further include a nonvolatile memory, for example, at least one magnetic disk storage device, a flash memory, or a universal flash storage (universal flash storage, UFS).

The electronic device 100 implements a display function by using the GPU, the display 160, the application processor, and the like. The GPU is a microprocessor for image processing, and is connected to the display 160 and the application processor. The GPU is configured to perform mathematical and geometric computation for graphics rendering. The processor 120 may include one or more GPUs, and the one or more GPUs execute program instructions to generate or change display information.

The display 160 is configured to display an image, a video, and the like. The display 160 includes a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 160, where N is a positive integer greater than 1.

A software system of the electronic device 100 may use a layered architecture, an event-driven architecture, a microkernel architecture, a micro service architecture, or a cloud architecture.

In some embodiments, the electronic device 100 may be a large-screen device.

For example, FIG. 2 is a diagram of a structure of an electronic device 200. The electronic device 200 may include a wireless communication module 210, an antenna 2, an antenna 3, an antenna 4, an antenna 5, an antenna 6, an ultra-wideband (ultra wide band, UWB) module 220, a processor 230, an internal memory 240, a power management module 250, a power supply 260, a sensor module 270, and the like.

It may be understood that the structure shown in this embodiment of this application does not constitute a specific limitation on the electronic device 200. In some other embodiments of this application, the electronic device 200 may include more or fewer components than those shown in the figure, or some components may be combined, or some components may be split, or different component arrangements may be used. The components shown in the figure may be implemented by hardware, software, or a combination of software and hardware.

The wireless communication module 210 may provide a wireless communication solution including a WLAN (for example, a Wi-Fi network), BT, a GNSS, FM, NFC, IR, and the like, and applied to the electronic device 200. The wireless communication module 210 may be one or more components integrating at least one communication processing module. The wireless communication module 210 receives an electromagnetic wave through the antenna 3, performs frequency modulation and filtering processing on an electromagnetic wave signal, and sends the processed signal to the processor 230. The wireless communication module 210 may further receive a to-be-sent signal from the processor 230, perform frequency modulation and amplification on the signal, and convert the signal into an electromagnetic wave for radiation through the antenna 3.

In some embodiments, the antenna 2 and the antenna 3 of the electronic device 200 are coupled to the wireless communication module 210, so that the electronic device 200 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, the GNSS, the WLAN, NFC, FM, the IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS), or the like.

The UWB module 220 may provide a UWB communication solution, a ranging solution, and the like applied to a UWB tag device. When the electronic device 200 integrates one UWB transmit antenna (for example, the antenna 4) and multiple UWB receive antennas (for example, the antenna 5 and the antenna 6), posture measurement of the electronic device 200 may be implemented based on a UWB signal.

The processor 230 may include one or more processing units. For example, the processor 230 may include an application processor, a modem processor, a graphics processing unit, an ISP, a controller, a memory, a video codec, a DSP, a baseband processor, and/or an NPU. Different processing units may be independent components, or may be integrated into one or more processors.

In some embodiments, the processor 230 is configured to process communication or ranging information output by the UWB module 220, and the processor 230 is further responsible for calculating a positioning result of a UWB tag.

The controller may be a nerve center and a command center of the electronic device 200. The controller may generate an operation control signal based on instruction operation code and a time sequence signal, to complete control over instruction fetching and instruction execution.

A memory may be further disposed in the processor 230, and is configured to store instructions and data. In some embodiments, the memory in the processor 230 is a cache memory. The memory may store instructions or data just used or cyclically used by the processor 230. If the processor 230 needs to use the instructions or data again, the processor 230 may invoke the instructions or data directly from the memory. This avoids repeated access, reduces waiting time of the processor 230, and improves system efficiency.

In some embodiments, the processor 230 may include one or more interfaces. The interface may include an I2C interface, an I2S interface, a PCM interface, a UART interface, an MIPI, a GPIO interface, a SIM interface, a USB interface, and/or the like.

The antenna 2 and the antenna 3 are configured to transmit and receive electromagnetic wave signals. Each antenna in the electronic device 200 may be configured to cover one or more communication frequency bands. Different antennas may be further reused to improve antenna utilization. For example, the antenna 2 may be reused as a diversity antenna in a wireless local area network. In some other embodiments, the antenna may be used in combination with a tuning switch.

The internal memory 240 may be configured to store computer-executable program code, and the executable program code includes instructions. The processor 230 performs various function applications and data processing of the electronic device 200 by running the instructions stored in the internal memory 240. The internal memory 240 may include a program storage area and a data storage area. The program storage area may store an operating system, an App required by at least one function (for example, a sound playing function or an image playing function), and the like. The data storage area may store data (such as audio data and a phone book) created in use of the electronic device 200. In addition, the internal memory 240 may include a high-speed random access memory, and may further include a nonvolatile memory, for example, at least one magnetic storage device, a flash memory device, or a UFS.

The power management module 250 is configured to connect to the processor 230. The power management module 250 receives an input of a battery 260 and/or a charging management module, and supplies power to the processor 230, the internal memory 240, the wireless communication module 210, the UWB module 220, the sensor module 270, and the like. The power management module 250 may be further configured to monitor parameters such as a battery capacity, a battery cycle count, and a battery health status (electric leakage or impedance). In some other embodiments, the power management module 250 may alternatively be disposed in the processor 230. In some other embodiments, the power management module 250 and the charging management module may alternatively be disposed in a same component.

A wireless communication function of the electronic device 200 may be implemented by the antenna 2, the antenna 3, the antenna 4, the antenna 5, the antenna 6, the wireless communication module 210, the UWB module 220, the modem processor, the baseband processor, and the like.

The sensor module 270 may include a gyroscope sensor 271, an acceleration sensor 272, a geomagnetic sensor 273, and the like.

In some embodiments, the sensor module 270 is configured to output information of a yaw angle, a pitch angle, and a roll angle of the UWB tag.

A software system of the electronic device 200 may use a layered architecture, an event-driven architecture, a microkernel architecture, a micro service architecture, or a cloud architecture.

In some embodiments, the electronic device 200 is a pointing device, for example, may be a pointing remote control.

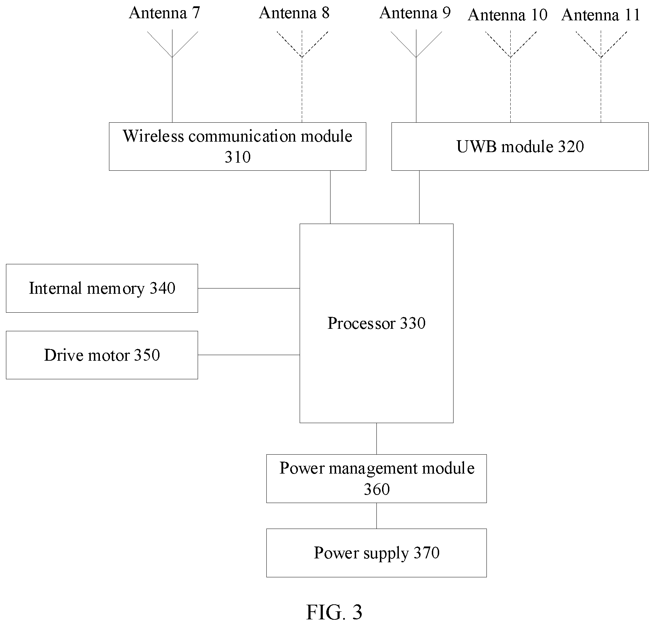

For example, FIG. 3 is a diagram of a structure of an electronic device 300. The electronic device 300 may include a wireless communication module 310, an antenna 7, an antenna 8, an antenna 9, an antenna 10, an antenna 11, a UWB module 320, a processor 330, an internal memory 340, a drive motor 350, a power management module 360, a power supply 370, and the like.

It may be understood that the structure shown in this embodiment of this application does not constitute a specific limitation on the electronic device 300. In some other embodiments of this application, the electronic device 300 may include more or fewer components than those shown in the figure, or some components may be combined, or some components may be split, or different component arrangements may be used. The components shown in the figure may be implemented by hardware, software, or a combination of software and hardware.

The wireless communication module 310 may provide a wireless communication solution including a WLAN (for example, a Wi-Fi network), BT, a GNSS, FM, NFC, IR, and the like, and applied to the electronic device 300. The wireless communication module 310 may be one or more components integrating at least one communication processing module. The wireless communication module 310 receives an electromagnetic wave through the antenna 8, performs frequency modulation and filtering processing on an electromagnetic wave signal, and sends the processed signal to the processor 330. The wireless communication module 310 may further receive a to-be-sent signal from the processor 330, perform frequency modulation and amplification on the signal, and convert the signal into an electromagnetic wave for radiation through the antenna 8.

In some embodiments, the antenna 7 and the antenna 8 of the electronic device 300 are coupled to the wireless communication module 310, so that the electronic device 300 can communicate with a network and another device by using a wireless communication technology. The wireless communication technology may include technologies such as GSM, GPRS, CDMA, WCDMA, TD-SCDMA, LTE, BT, GNSS, WLAN, NFC, FM, and/or IR. The GNSS may include a GPS, a GLONASS, a BDS, a QZSS, and/or an SBAS.

The UWB module 320 may provide solutions such as UWB communication and ranging that are applied to the electronic device 300. It should be noted that the electronic device 300 may be equipped with only one UWB signal receive antenna. In this case, at least three electronic devices 300 are required to implement three-dimensional positioning on the UWB tag. In another implementation solution, the electronic device 300 may be equipped with a plurality of UWB signal receive antennas, and an antenna arrangement needs to meet a specific rule. In this implementation solution, at least two UWB receive antennas are required to implement two-dimensional positioning on the UWB tag, and at least three UWB receive antennas (for example, the antenna 9, the antenna 10, and the antenna 11) are required to implement three-dimensional positioning on the tag. In addition, the electronic device 300 needs to be equipped with only one UWB transmit antenna.

The processor 330 may include one or more processing units. For example, the processor 330 may include an application processor, a modem processor, a graphics processing unit, an ISP, a controller, a memory, a video codec, a DSP, a baseband processor, and/or an NPU. Different processing units may be independent components, or may be integrated into one or more processors.

In some embodiments, the processor 330 is configured to process communication or ranging information output by the UWB module 220, and the processor 230 is further responsible for calculating a positioning result of the UWB tag.

The controller may be a nerve center and a command center of the electronic device 300. The controller may generate an operation control signal based on instruction operation code and a time sequence signal, to complete control over instruction fetching and instruction execution.

A memory may be further disposed in the processor 330, and is configured to store instructions and data. In some embodiments, the memory in the processor 330 is a cache memory. The memory may store instructions or data just used or cyclically used by the processor 330. If the processor 330 needs to use the instructions or data again, the processor 330 may invoke the instructions or data directly from the memory. This avoids repeated access, reduces waiting time of the processor 330, and improves system efficiency.

In some embodiments, the processor 330 may include one or more interfaces. The interface may include an I2C interface, an I2S interface, a PCM interface, a UART interface, an MIPI, a GPIO interface, a SIM interface, a USB interface, and/or the like.

The antenna 7 and the antenna 8 are configured to transmit and receive electromagnetic wave signals. Each antenna in the electronic device 300 may be configured to cover one or more communication frequency bands. Different antennas may be further reused to improve antenna utilization. For example, the antenna 7 may be reused as a diversity antenna in a wireless local area network. In some other embodiments, the antenna may be used in combination with a tuning switch.

The internal memory 340 may be configured to store computer-executable program code, and the executable program code includes instructions. The processor 330 performs various function applications and data processing of the electronic device 300 by running the instructions stored in the internal memory 340. The internal memory 340 may include a program storage area and a data storage area. The program storage area may store an operating system, an App required by at least one function (for example, a sound playing function or an image playing function), and the like. The data storage area may store data (such as audio data and a phone book) created in use of the electronic device 300. In addition, the internal memory 340 may include a high-speed random access memory, and may further include a nonvolatile memory, for example, at least one magnetic storage device, a flash memory device, or a UFS.

The power management module 360 is configured to connect to the processor 330. The power management module 360 receives an input of a battery 370 and/or a charging management module, and supplies power to the processor 330, the internal memory 340, the wireless communication module 310, the UWB module 320, the drive motor 350, and the like. The power management module 360 may be further configured to monitor parameters such as a battery capacity, a battery cycle count, and a battery health status (electric leakage or impedance). In some other embodiments, the power management module 360 may alternatively be disposed in the processor 330. In some other embodiments, the power management module 360 and the charging management module may alternatively be disposed in a same component.

A wireless communication function of the electronic device 300 may be implemented by the antenna 7, the antenna 8, the antenna 9, the antenna 10, the antenna 11, the wireless communication module 310, the UWB module 320, the modem processor, the baseband processor, and the like.

A software system of the electronic device 300 may use a layered architecture, an event-driven architecture, a microkernel architecture, a micro service architecture, or a cloud architecture.

In some embodiments, the electronic device 300 is a UWB base station.

It should be understood that the technical solutions in embodiments of this application may be applied to systems such as Android, iOS, and HarmonyOS.

For example, the technical solutions in embodiments of this application may be applied to a device having a cursor control function and an electronic device with a screen. For example, the technical solutions may be applied to a pointing remote control, another device having a pointing remote control function, or a large-screen device, or may be applied to another device having a cursor control function, an electronic device in a 5G network, or an electronic device in a future evolved public land mobile communication network (public land mobile network, PLMN). A main application scenario may be a scenario in which a cursor is controlled by using a pointing remote control, for example, a pointing remote control is used to control movement of a cursor on a large screen, to play a shooting game, a fruit-cutting game, drawing, and the like on the large screen.

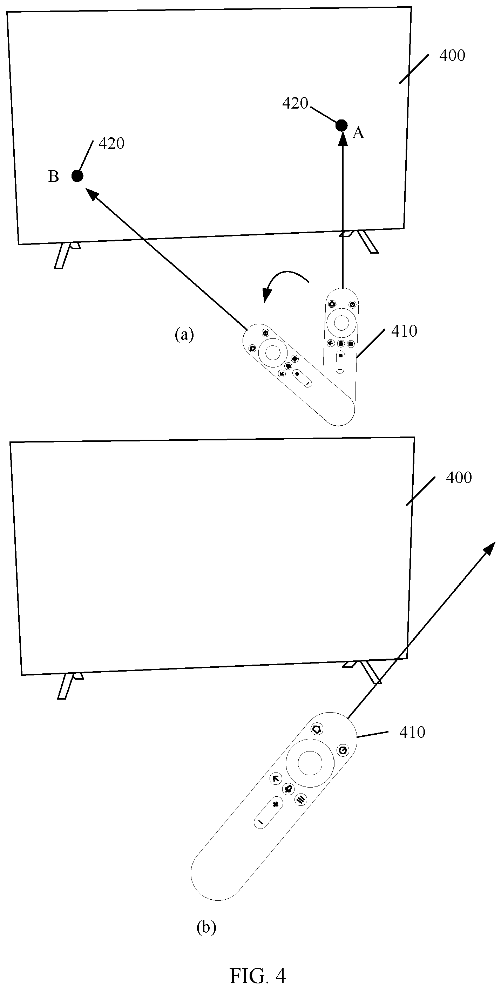

A usage scenario of a pointing remote control provided in an embodiment of this application is described in detail illustratively with reference to FIG. 4 to facilitate a clearer understanding of the pointing remote control.

As shown in FIG. 4, a cursor 420 displayed on a display of a large-screen device 400 may be controlled by using a pointing remote control 410. A display position of the cursor 420 is the same as a position that the pointing remote control 410 points to on the display. In other words, wherever the pointing remote control 410 points on the display, the cursor 420 is displayed at that position on the display.

As shown in (a) in FIG. 4, when the pointing remote control 410 switches from pointing to a position A on the display to pointing to a position B on the display, correspondingly, the display position of the cursor 420 is also switched from the position A to the position B. As shown in (b) in FIG. 4, when the pointing remote control 410 points outside the display of the large-screen device 400, the cursor is not displayed on the display of the large-screen device 400.

User experience of the pointing remote control is similar to that of an infrared laser pointer. In addition, the pointing remote control can implement interaction with content displayed on the display by controlling movement of the cursor on the display. This can improve interaction experience between a user and a large screen. For example, the user may play a shooting game, a fruit-cutting game, and the like on the large screen by using the pointing remote control, which better aligns with a user habit.

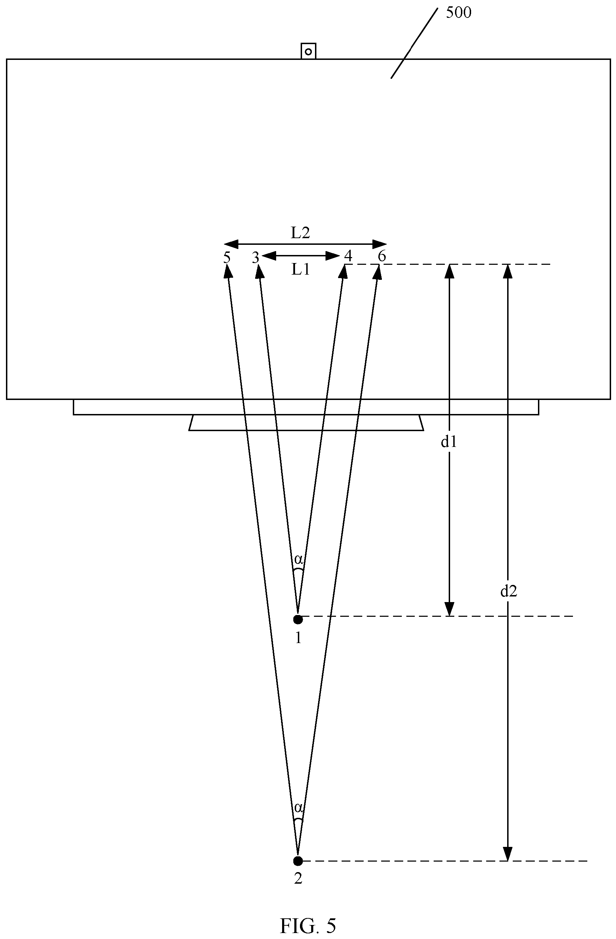

Further, FIG. 5 is a diagram illustrating how sensitivity of cursor movement changes in a process of using a pointing remote control according to an embodiment of this application.

As shown in FIG. 5, after the pointing remote control rotates horizontally at a position 1 by an angle of α, a pointing position of the pointing remote control on a display of a large-screen device 500 moves from a position 3 to a position 4. Synchronously, a display position of a cursor also moves from the position 3 to the position 4. A distance between the position 3 and the position 4 is L1, and a distance from the position 1 to the display of the large-screen device 500 is d1. After the pointing remote control moves from the position 1 to a position 2 that is farther away from the display, when the pointing remote control undergoes a same posture change (horizontal rotation by an angle of α) as in the position 1, the pointing position of the pointing remote control on the display of the large-screen device 500 moves from a position 5 to a position 6. Synchronously, the display position of the cursor also moves from the position 6 to the position 6. A distance between the position 5 and the position 6 is L2, and L2 is clearly greater than L1. A distance from the position 2 to the display of the large-screen device 500 is d2.

It can be learned that, given the same posture change of the pointing remote control, if the pointing remote control is farther away from the display, a movement range of the cursor on the display is larger.

Herein, sensitivity s of the cursor may be introduced to measure the foregoing phenomenon. When a resolution K and a screen size L of the display of the large-screen device remain unchanged, the sensitivity s of the cursor and the distance d between the pointing remote control and the display have the following relationship: $s = \frac{K}{2 ⋅ arctan \left(L/2d\right)}$

It can be learned that s and d have a monotonically increasing relationship. During use of the pointing remote control, sensitivity of cursor movement gradually increases as a usage distance increases. In other words, given the same posture change of the pointing remote control, a longer distance between the remote control and a large screen indicates a larger movement range of the cursor.

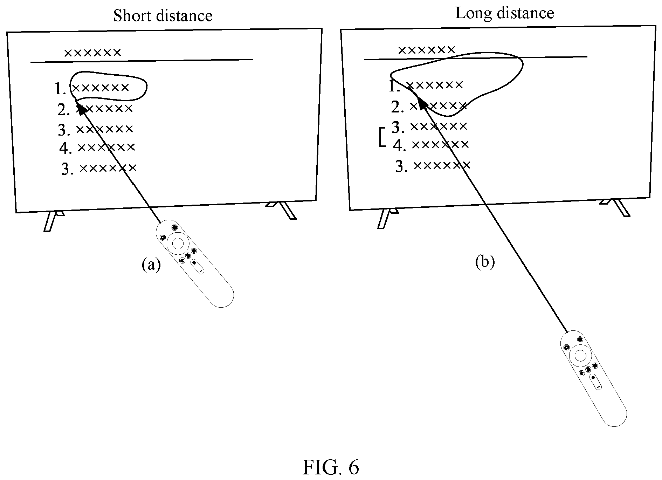

For example, an interaction scenario between a pointing remote control and a display is a document annotation scenario. FIG. 6 is a diagram of a scenario in which a pointing remote control performs cursor control at different usage distances according to an embodiment of this application.

If a user intends to annotate content of a first subheading by controlling a cursor using the pointing remote control, the user may control a movement track of a pointing position of the pointing remote control on the display by controlling a posture change of the pointing remote control, so as to control a movement track of the displayed cursor, where the movement track of the displayed cursor is a finally displayed annotation. As shown in (a) in FIG. 6, when a distance between the pointing remote control and the display is a short distance, the user can accurately annotate the content of the first subheading. However, as shown in (b) in FIG. 6, when the distance between the pointing remote control and the display is a long distance, because sensitivity of cursor movement is very high, even a slight posture change of the pointing remote control may cause the cursor to move a long distance on the display. During the document annotation, an annotation range is likely to extend to content that does not need to be annotated, and it is difficult for the user to accurately annotate the content of the first subheading.

Therefore, when the user uses a large screen at a relatively long distance by using the pointing remote control, a slight hand jitter may cause the cursor to move within a large range. When an area of a target widget to which the cursor moves is relatively small, it is difficult to control the cursor to accurately move to the target widget. Consequently, the user cannot smoothly use the pointing remote control to control the cursor to perform a fine operation within a small range, such as drawing and document annotation, and user experience is severely affected.

With respect to the foregoing problem, in some embodiments, an air mouse method may be used for a remote control to control a cursor. In the method, the remote control has no pointing effect, a pointing position of the remote control is not associated with a display position of the cursor, and the cursor is displayed on a display regardless of a position that the remote control points to. In this method, sensitivity of cursor movement on the display is a constant value, which is irrelevant to a distance between the remote control and the display. Although this method can alleviate a jitter problem caused by excessively high sensitivity of the cursor to some extent, in this method, the display position of the cursor is relative coordinates rather than absolute coordinates. During use, the user needs to frequently perform calibration to manually control the cursor. This method cannot be applied to a pointing remote control, and cannot resolve a cursor jitter problem during use of the pointing remote control.

Therefore, in the existing cursor control method, in a process in which the user controls cursor movement by using the remote control at different distances, a jitter reduction effect of the cursor cannot be adaptively adjusted, which severely affects user experience.

In view of this, embodiments of this application provide a cursor control method, an electronic device, and a system. The method, electronic device, and system can be used to adaptively change sensitivity of a corresponding cursor when a distance between a pointing remote control and a display changes, so that a movement speed and a movement range of the cursor adapt to a current usage distance and a posture change of the pointing remote control, and that a jitter reduction effect of the cursor can be adaptively adjusted when a user uses the remote control at different distances.

It should be understood that, in embodiments of this application, an example in which a pointing device is a pointing remote control is used for description. However, this does not constitute any limitation on an applicable scope of the solutions of this application. The pointing device may alternatively be any device having a pointing function.

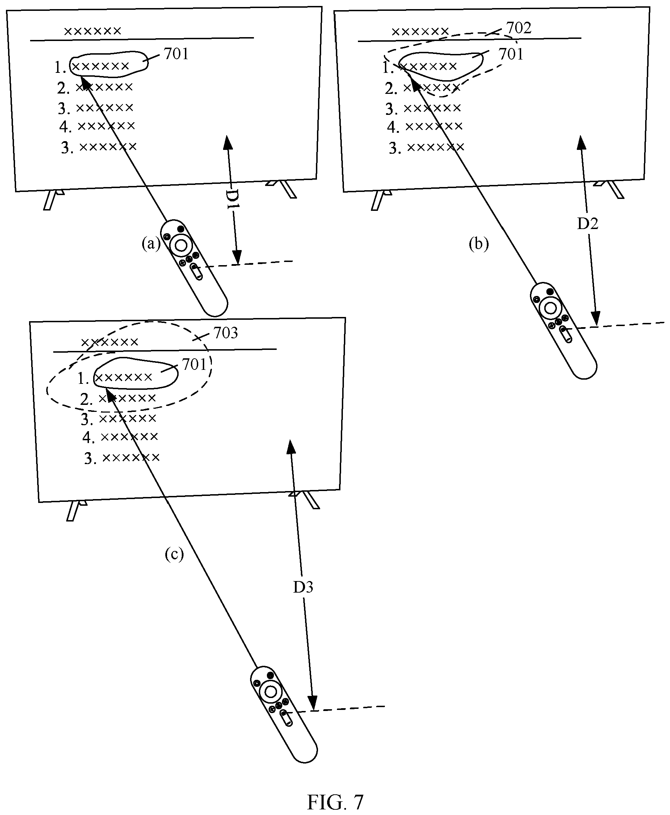

For example, FIG. 7 is a diagram of an application scenario corresponding to a solution of this application according to an embodiment of this application.

If a user intends to annotate content of a first subheading by controlling a cursor using a pointing remote control, the user may control a movement track of a pointing position of the pointing remote control on a display by controlling a posture change of the pointing remote control, so as to control a movement track of the displayed cursor, where the movement track of the displayed cursor is a finally displayed annotation.

As shown in (a) in FIG. 7, when a distance between the pointing remote control and the display is D1 (D1 is sufficiently close, for example, D1 is less than 0.5 m), when the user intends to annotate the content of the first subheading, that is, when the user intends to control the movement track of the cursor to be presented as drawing a circle around the content of the first subheading within a range 701, because sensitivity of cursor movement is not high, a damping coefficient of the cursor corresponding to the distance D1 is relatively large, for example, the damping coefficient is 1, and the user needs to control the pointing position of the pointing remote control on the display to draw a circle around the content of the first subheading within the range 701. In this case, the movement track of the pointing position almost coincides with the movement track of the cursor.

As shown in (b) in FIG. 7, when the distance between the pointing remote control and the display is changed from D1 to D2 (D2 is greater than D1), when the user intends to annotate the content of the first subheading, that is, when the user intends to control the movement track of the cursor to be presented as drawing a circle around the content of the first subheading within the range 701, because compared with the distance D1 shown in (a) in FIG. 7, sensitivity of cursor movement is higher, correspondingly, the damping coefficient of the cursor decreases, and the user only needs to control the pointing position of the pointing remote control on the display to draw a circle around the content of the first subheading within a range 702. In this case, a distribution range corresponding to the movement track of the pointing position is the range 702 (a range shown by a dashed line in (b) in FIG. 7), the range 702 includes the range 701, and the range 702 is greater than the range 701.

Further, as shown in (b) in FIG. 7, when the distance between the pointing remote control and the display is changed from D2 to D3 (D3 is greater than D2), when the user intends to annotate the content of the first subheading, that is, when the user intends to control the movement track of the cursor to be presented as drawing a circle around the content of the first subheading within the range 701, because compared with the distance D2 shown in (b) in FIG. 7, sensitivity of cursor movement is higher, correspondingly, the damping coefficient of the cursor further decreases, and the user only needs to control the pointing position of the pointing remote control on the display to draw a circle around the content of the first subheading within a range 703. In this case, a distribution range corresponding to the movement track of the pointing position is the range 703 (a range shown by a dashed line in (c) in FIG. 7), the range 703 includes the range 701, the range 703 is greater than the range 702, and the range 703 includes the range 701.

It should be understood that a smaller damping coefficient of the cursor indicates a smaller ratio of a displacement value corresponding to the cursor per frame to a displacement value corresponding to the pointing position per frame.

In some embodiments, when the damping coefficient of the cursor is adjusted based on the distance between the remote control and a large screen, the damping coefficient of the cursor can be further adjusted with reference to an operating status of the remote control by the user. For example, the damping coefficient of the cursor is further adjusted with reference to a movement speed of the pointing position of the remote control on the large screen or the posture change of the remote control. A higher movement speed of the pointing position indicates a smaller adjustment of the damping coefficient of the cursor, and a lower movement speed of the pointing position indicates a greater adjustment of the damping coefficient of the cursor; and a faster posture change of the remote control indicates a smaller adjustment of the damping coefficient of the cursor, and a slower posture change of the remote control indicates a greater adjustment of the damping coefficient of the cursor.

It may be understood that when the pointing position moves, the cursor starts to move, and when the pointing position stops moving, the cursor stops moving.

In this embodiment of this application, a spatial relationship between the pointing remote control and the interactive large screen can be sensed in real time by using a space sensing capability of the pointing remote control, and the damping coefficient of the cursor can be adaptively adjusted based on measured position information of the remote control relative to the large screen. Further, a jitter reduction effect of the cursor can be adaptively adjusted based on the distance between the remote control and the large screen and/or the operating status of the remote control.

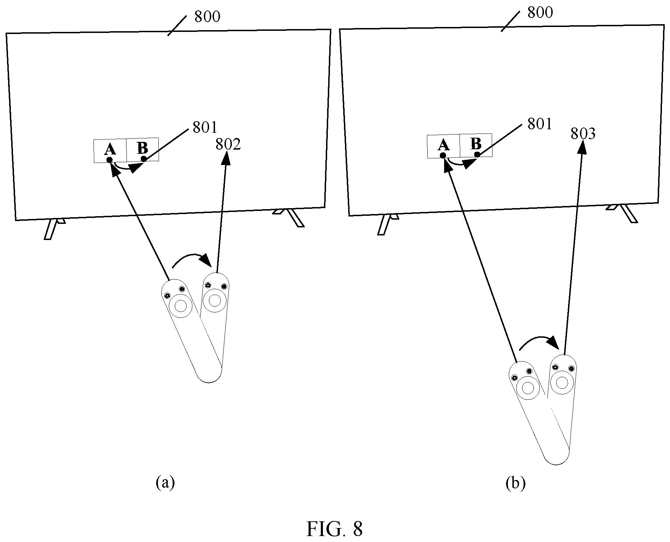

For example, a widget operation scenario is used as an example. FIG. 8 is a diagram of an application scenario corresponding to another solution of this application according to an embodiment of this application.

If a user intends to control, by using a pointing remote control, a cursor 801 to move from a widget "A" to a widget "B", the user may control a posture change of the pointing remote control to control movement of a pointing position of the pointing remote control on a display, so as to control movement of the displayed cursor 801.

As shown in (a) in FIG. 8, when a distance between the pointing remote control and the display is a first distance, when the user intends to control the cursor 801 to move from the widget "A" to the widget "B", the user may move the pointing position of the remote control on a large screen 800 to a position 802, instead of moving the pointing position of the remote control on the large screen 800 to a position of the widget "B".

It may be understood that, in this embodiment of this application, when the pointing position of the remote control on the large screen starts to move, the cursor synchronously starts to move, and a ratio (less than or equal to 1) of a movement speed of the cursor to a movement speed of the pointing position decreases with the increase of the distance between the remote control and the large screen, that is, a damping coefficient of the cursor decreases with the increase of the distance between the remote control and the large screen. When the pointing position stops moving, the cursor synchronously stops moving.

As shown in (b) in FIG. 8, when the distance between the pointing remote control and the display increases to a second distance, and the user intends to control the cursor 801 to move from the widget "A" to the widget "B", compared with (a) in FIG. 8, because the distance between the remote control and the large screen increases, correspondingly, the damping coefficient of the cursor further decreases. Therefore, the user can move the pointing position of the remote control on the large screen 800 to a position 803, instead of moving the pointing position of the remote control on the large screen 800 to the position of the widget "B", where a distance between the position 803 and the control "B" is greater than a distance between the position 802 and the widget "B".

In some embodiments, when the damping coefficient of the cursor is adjusted based on the distance between the remote control and the large screen, the damping coefficient of the cursor can be further adjusted with reference to an operating status of the remote control by the user. For example, the damping coefficient of the cursor is further adjusted with reference to the movement speed of the pointing position of the remote control on the large screen or the posture change of the remote control. A higher movement speed of the pointing position indicates a smaller adjustment of the damping coefficient of the cursor, and a lower movement speed of the pointing position indicates a greater adjustment of the damping coefficient of the cursor; and a faster posture change of the remote control indicates a smaller adjustment of the damping coefficient of the cursor, and a slower posture change of the remote control indicates a greater adjustment of the damping coefficient of the cursor.

In the existing cursor control method, when the user uses the remote control at a relatively long distance, for example, 5 m away from the large screen, if the cursor needs to be moved from the widget "A" to the widget "B" on the screen, where a physical spacing between the two widgets is 0.1 m, the user needs to accurately control the remote control to rotate by 1° to complete the operation. The operation is difficult and prone to deviation. In this embodiment of this application, because cursor damping is added, the user may control the remote control to rotate by a larger angle to move the cursor from the widget "A" to the widget "B". For example, the user controls the remote control to rotate by 5°, but the cursor displayed on the screen moves only by 1°, so that operation difficulty in controlling the cursor by the user is significantly reduced.

In this embodiment of this application, a spatial relationship between the pointing remote control and the interactive large screen can be sensed in real time by using a space sensing capability of the pointing remote control, and the damping coefficient of the cursor can be adaptively adjusted based on measured position information of the remote control relative to the large screen. Further, a jitter reduction effect of the cursor can be adaptively adjusted based on the distance between the remote control and the large screen and/or the operating status of the remote control.

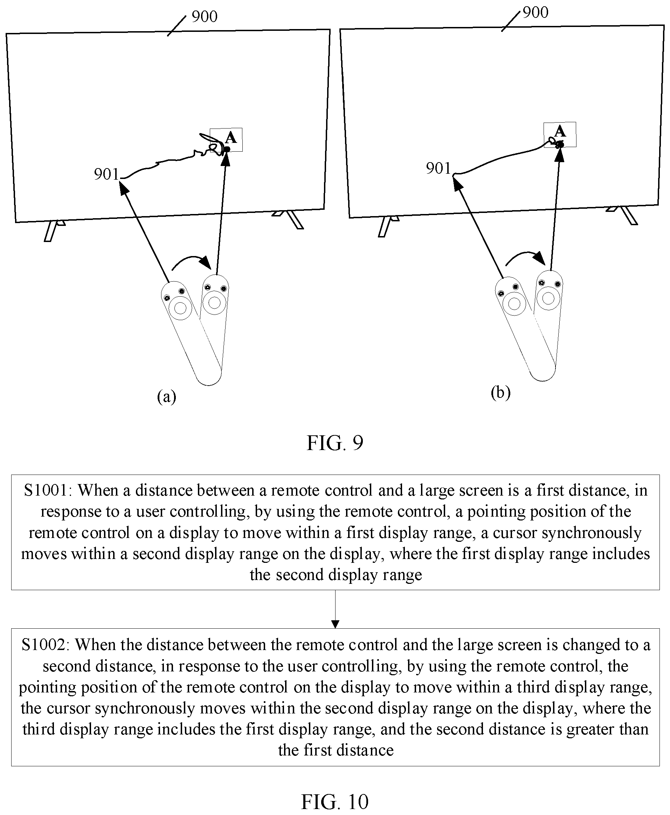

For example, FIG. 9 is a diagram of comparison between a cursor control effect in a solution of this application and a cursor control effect in a conventional solution according to an embodiment of this application.

If a user intends to control, by using a pointing remote control, a cursor to move to a widget "A", the user may control a posture change of the pointing remote control to control movement of a pointing position of the pointing remote control on a display, so as to control movement of a displayed cursor 901.

(a) in FIG. 9 is a diagram showing a cursor movement status when a distance between a remote control and a large screen is a first distance in a conventional solution.

As shown in (a) in FIG. 9, when the user intends to control the cursor 901 to move from a display area outside the widget "A" to the widget "A", the user first quickly changes an operation posture of the remote control to quickly move the pointing position to the widget "A", and after the pointing position approaches the widget "A", the user controls the posture of the remote control to slowly change to slowly move the pointing position, so that the cursor can finally stay on the widget "A". However, because a movement track of the cursor is the same as a movement track of the pointing position, when the remote control is far away from the large screen, sensitivity of cursor movement is relatively high. In addition, during slow movement within a small range, sensitivity of cursor movement is far higher than an expected value of the user, and a severe cursor jitter phenomenon occurs. It is difficult for the user to control the cursor to be accurately displayed on the widget "A".

(b) in FIG. 9 is a diagram showing a cursor movement status when a distance between a remote control and a large screen is a first distance according to an embodiment of this application.

As shown in (b) in FIG. 9, when the user intends to control the cursor 901 to move from a display area outside the widget "A" to the widget "A", the user first quickly changes an operation posture of the remote control to quickly move the pointing position to the widget "A", and after the pointing position approaches the widget "A", the user controls the posture of the remote control to slowly change to slowly move the pointing position, so that the cursor can finally stay on the widget "A". A damping coefficient of the cursor can be adaptively adjusted based on the distance between the remote control and the large screen and the operating status of the remote control, so that sensitivity of cursor movement matches an expected value of the user. Specifically, when the pointing position quickly moves toward the widget "A", sensitivity of cursor movement is not adjusted (the damping coefficient of the cursor is 1) or sensitivity of cursor movement is adjusted only based on the distance between the remote control and the large screen, so that the cursor can follow the pointing position to quickly move close to the widget "A"; and after a movement speed of the pointing position becomes lower, the damping coefficient of the cursor adaptively decreases based on the distance between the remote control and the large screen and a posture change speed of the remote control, so that a movement range of the cursor is smaller than a movement range of the pointing position, thereby reducing a cursor jitter degree and adaptively adjusting a jitter reduction effect of the cursor.

It can be learned that, when the user quickly points to the widget "A", because the user operates the remote control with the posture transitioning from a fast change to a slow change, jitter occurs within a small range. In the scenario of the conventional solution, the cursor jitters severely, and may move out of a response area of the widget "A", resulting in widget tapping failure. In this embodiment of this application, because a damping effect is added during small-range movement, a jitter range of the cursor is clearly suppressed, and controllability of the cursor is significantly improved.

In this embodiment of this application, a spatial relationship between the pointing remote control and the interactive large screen can be sensed in real time by using a space sensing capability of the pointing remote control, and the damping coefficient of the cursor can be adaptively adjusted based on measured position information of the remote control relative to the large screen. Further, sensitivity of the cursor is adjusted, and the jitter reduction effect of the cursor can be adaptively adjusted based on the distance between the remote control and the large screen and/or the operating status of the remote control. In this way, the user can experience cursor movement by a small amplitude without jitter and cursor movement by a large amplitude without delay by using the remote control at any position. Because when the user performs fine pointing selection, the user generally moves close to a widget quickly, and then makes a slow adjustment to select the widget accurately, the method can be well applicable to a scenario in which the user performs a fine operation on the large screen.

It should be understood that the foregoing describes the solutions in embodiments of this application by using a document annotation scenario and a widget interaction scenario as examples. The solutions in this application may be applied to any scenario in which a pointing device performs interaction with content on a display. For example, the solutions may be further applied to a scenario in which a pointing device is used to draw a picture or play a game on a large screen. This is not limited in this application.

For example, FIG. 10 is a schematic flowchart of a cursor control method 1000 according to an embodiment of this application. As shown in FIG. 10, the method 1000 includes the following steps.

S1001: When a distance between a remote control and a large screen is a first distance, in response to a user controlling, by using the remote control, a pointing position of the remote control on a display to move within a first display range, a cursor synchronously moves within a second display range on the display, where the first display range includes the second display range.

The remote control in this embodiment of this application may be understood as a pointing remote control.

The pointing position may also be described as a position of an intersection point between a direction pointed to by the remote control and a display of the large screen.

The first display range is a distribution range of a movement track corresponding to the pointing position, and the second display range is a distribution range of a movement track corresponding to the cursor.

It may also be understood that the movement track of the pointing position within the first display range is a first track, and the movement track of the cursor within the second display range is a second track, and a length of the first track is greater than a length of the second track.

S1002: When the distance between the remote control and the large screen is changed to a second distance, in response to controlling, by using the remote control, the pointing position of the remote control on the display to move within a third display range, the cursor synchronously moves within the second display range on the display, where the third display range includes the first display range, and the second distance is greater than the first distance.

The third display range is a distribution range of a movement track corresponding to the pointing position.

The third display range includes the first display range, and the first display range includes the second display range. This indicates that the third display range is greater than the first display range, and that the first display range is greater than the second display range.

It may also be understood that the movement track of the pointing position within the third display range is a third track, and a length of the third track is greater than the length of the first track, and the length of the first track is greater than the length of the second track.

In other words, when the distance between the remote control and the large screen is the first distance, if the user expects the cursor to perform an interaction operation within the second display range, the user may control the pointing position to move within the larger first display range. When the distance between the remote control and the large screen is increased to the second distance, if the user expects the cursor to still perform an interaction operation within the second display range, the user may control the pointing position to move within the third display range that is greater than the first display range, thereby alleviating a cursor jitter phenomenon caused by the increase of the usage distance (sensitivity of cursor movement is increased).

In some embodiments, S1001 and S1002 occur when a posture change speed of the remote control is relatively high.

Optionally, S1101 and S1102 may alternatively be described as follows: When the distance between the remote control and the large screen is the first distance, in response to the user controlling, by using the remote control, the pointing position of the remote control on the display to move on the display by a first amplitude, the cursor synchronously moves on the display by a second amplitude, where the first amplitude is greater than the second amplitude. When the distance between the remote control and the large screen is changed to the second distance, in response to controlling, by using the remote control, the pointing position of the remote control on the display to move on the display by a third amplitude, the cursor synchronously moves on the display by the second amplitude, where the third amplitude is greater than the first amplitude, and the second distance is greater than the first distance.

In some embodiments, the first amplitude, the second amplitude, and the third amplitude may all be distance magnitudes or may all be angular magnitudes.

In this embodiment of this application, a spatial relationship between the pointing remote control and the interactive large screen can be sensed in real time by using a space sensing capability of the pointing remote control, and sensitivity of the cursor can be adaptively adjusted based on measured position information of the remote control relative to the large screen. Further, a jitter reduction effect of the cursor can be adaptively adjusted based on the distance between the remote control and the large screen.

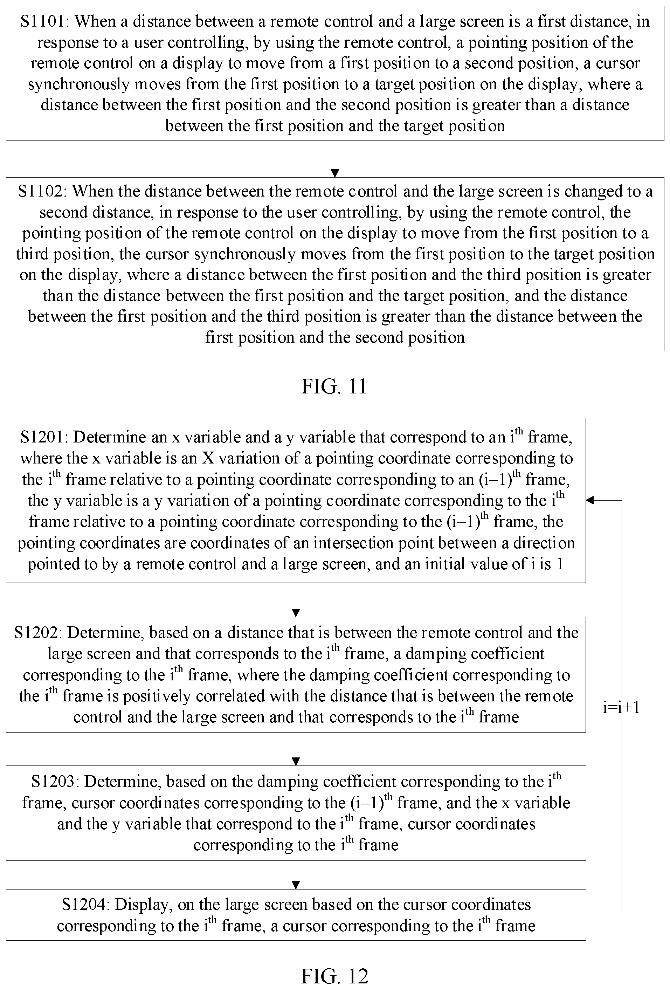

For example, FIG. 11 is a schematic flowchart of another cursor control method 1100 according to an embodiment of this application. As shown in FIG. 11, the method 1100 includes the following steps.

S1101: When a distance between a remote control and a large screen is a first distance, in response to a user controlling, by using the remote control, a pointing position of the remote control on a display to move from a first position to a second position, a cursor synchronously moves from the first position to a target position on the display, where a distance between the first position and the second position is greater than a distance between the first position and the target position.

When the pointing position starts to move, the cursor starts to move, and when the pointing position stops moving, the cursor stops moving. A movement direction of the cursor is always synchronized with a movement direction of the pointing position.

S1102: When the distance between the remote control and the large screen is a second distance, in response to the user controlling, by using the remote control, the pointing position of the remote control on the display to move from the first position to a third position, the cursor synchronously moves from the first position to the target position on the display, where a distance between the first position and the third position is greater than the distance between the first position and the target position, and the distance between the first position and the third position is greater than the distance between the first position and the second position.

The second distance is greater than the first distance.

For example, FIG. 12 is a schematic flowchart of another cursor control method 1200 according to an embodiment of this application. As shown in FIG. 12, the method 1200 includes the following steps.

S1201: Determine an x variable and a y variable that correspond to an i^{th} frame, where the x variable is a variation of a pointing coordinate corresponding to the i^{th} frame relative to a pointing coordinate corresponding to an (i-1)^{th} frame in an X-axis direction, the y variable is a variation of a pointing coordinate corresponding to the i^{th} frame relative to a pointing coordinate corresponding to the (i-1)^{th} frame in a Y-axis direction, the pointing coordinates are coordinates of an intersection point between a direction pointed to by a remote control and a large screen, and an initial value of i is 1.

In an example, in the (i-1)^{th} frame, coordinates that the remote control points to on the large screen are (x1, y1), and in the i^{th} frame, coordinates that the remote control points to on the large screen are (x2, y2). In this case, the x variable corresponding to the i^{th} frame is x2-x1, and the y variable corresponding to the i^{th} frame is y2-y1.

S1202: Determine, based on a distance that is between the remote control and the large screen and that corresponds to the i^{th} frame, a damping coefficient corresponding to the i^{th} frame, where the damping coefficient corresponding to the i^{th} frame is negatively correlated with the distance that is between the remote control and the large screen and that corresponds to the i^{th} frame.

S1203: Determine, based on the damping coefficient corresponding to the i^{th} frame, cursor coordinates corresponding to the (i-1)^{th} frame, and the x variable and the y variable that correspond to the i^{th} frame, cursor coordinates corresponding to the i^{th} frame.

In some embodiments, the x variable and the y variable that correspond to the i^{th} frame are first adjusted based on the damping coefficient, then a lateral coordinate of the cursor coordinates corresponding to the i^{th} frame is obtained by adding an adjusted x variable corresponding to the i^{th} frame to a lateral coordinate of the cursor coordinates corresponding to the (i-1)^{th} frame, and a longitudinal coordinate of the cursor coordinates corresponding to the i^{th} frame is obtained by adding an adjusted y variable corresponding to the i^{th} frame to a longitudinal coordinate of the cursor coordinates corresponding to the (i-1)^{th} frame.

In an example, the x variable corresponding to the i^{th} frame is x2-x1, the y variable corresponding to the i^{th} frame is y2-y1, the damping coefficient corresponding to the i^{th} frame is B1, and the cursor coordinates corresponding to the (i-1)^{th} frame are (x3, y3). In this case, the cursor coordinates corresponding to the i^{th} frame are (x3+B1(x2-x1), y3+B1(y2-y1)).

S1204: Display, on the large screen based on the cursor coordinates corresponding to the i^{th} frame, a cursor corresponding to the i^{th} frame.

Specifically, the large screen draws and displays, on the large screen based on the cursor coordinates corresponding to the i^{th} frame, the cursor corresponding to the i^{th} frame.

Then when the cursor is displayed in the (i+1)^{th} frame, i is set to i+1, and operations of S1201 to S1204 are cyclically performed, so that the cursor corresponding to the (i+1)^{th} frame is displayed on the large screen. This process is repeated, and the process is reflected as movement of the cursor at a user perception level.

In this embodiment of this application, a jitter reduction effect of the cursor can be adaptively adjusted based on the distance between the remote control and the large screen, so that the user can experience cursor movement without jitter when using the remote control at any position.

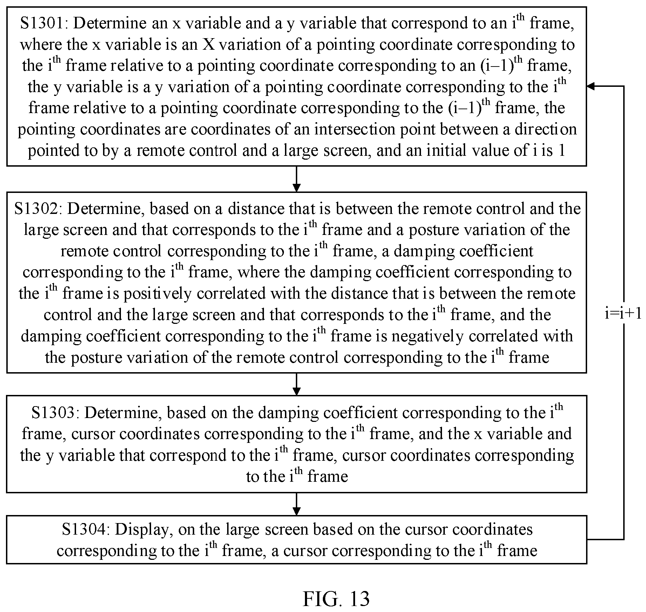

For example, FIG. 13 is a schematic flowchart of another cursor control method 1300 according to an embodiment of this application. As shown in FIG. 13, the method 1300 includes the following steps.

S1301 is the same as S1201 in the embodiment shown in FIG. 12. For brevity, details are not described herein again.

S1302: Determine, based on a distance that is between the remote control and the large screen and that corresponds to the i^{th} frame and a posture variation of the remote control corresponding to the i^{th} frame, a damping coefficient corresponding to the i^{th} frame, where the damping coefficient corresponding to the i^{th} frame is negatively correlated with the distance that is between the remote control and the large screen and that corresponds to the i^{th} frame, and the damping coefficient corresponding to the i^{th} frame is positively correlated with the posture variation of the remote control corresponding to the i^{th} frame.

S1303: Determine, based on the damping coefficient corresponding to the i^{th} frame, cursor coordinates corresponding to the (i-1)^{th} frame, and the x variable and the y variable that correspond to the i^{th} frame, cursor coordinates corresponding to the i^{th} frame.

In some embodiments, the damping coefficient corresponding to the i^{th} frame includes a first damping coefficient and a second damping coefficient. First, the x variable corresponding to the i^{th} frame is adjusted based on the first damping coefficient, the y variable corresponding to the i^{th} frame is adjusted based on the second damping coefficient, then a lateral coordinate of the cursor coordinates corresponding to the i^{th} frame is obtained by adding an adjusted x variable corresponding to the i^{th} frame to a lateral coordinate of the cursor coordinates corresponding to the (i-1)^{th} frame, and a longitudinal coordinate of the cursor coordinates corresponding to the i^{th} frame is obtained by adding an adjusted y variable corresponding to the i^{th} frame to a longitudinal coordinate of the cursor coordinates corresponding to the (i-1)^{th} frame.

In an example, the x variable corresponding to the i^{th} frame is x2-x1, the y variable corresponding to the i^{th} frame is y2-y1, the first damping coefficient and the second damping coefficient that correspond to the i^{th} frame are B2 and B3 respectively, and the cursor coordinates corresponding to the (i-1)^{th} frame are (x3, y3). In this case, the cursor coordinates corresponding to the i^{th} frame are (x3+B2(x2-x1), y3+B3(y2-y1)).

In some embodiments, the first damping coefficient is related to the distance between the remote control and the large screen, and the first damping coefficient is further related to a change of a posture yaw angle of the remote control in a current frame.

In some embodiments, the second damping coefficient is related to the distance between the remote control and the large screen, and the second damping coefficient is further related to a change of a posture pitch angle of the remote control in the current frame.

S1304: Display, on the large screen based on the cursor coordinates corresponding to the i^{th} frame, a cursor corresponding to the i^{th} frame.

In this embodiment of this application, a jitter reduction effect of the cursor can be adaptively adjusted based on the distance between the remote control and the large screen and a posture change of the remote control, so that a user can experience cursor movement by a small amplitude without jitter and cursor movement by a large amplitude without delay by using the remote control at any position.

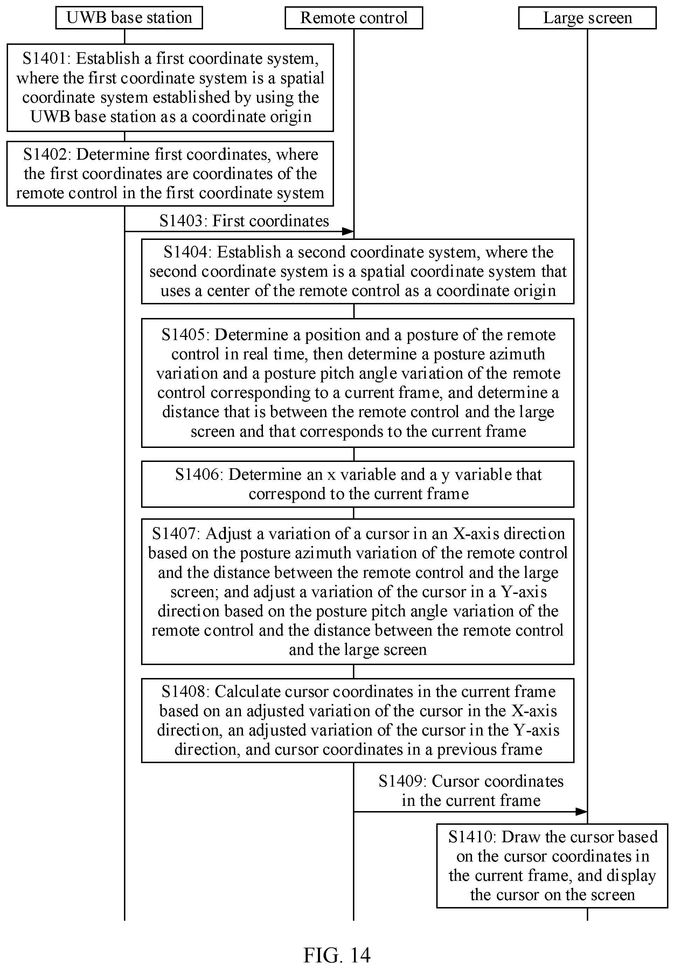

For example, FIG. 14 is an interaction diagram of a cursor control method 1400 according to an embodiment of this application. As shown in FIG. 14, the method is a method for interaction between a UWB base station, a remote control (that is, a pointing remote control), and a large screen. The method 1400 includes the following steps.

S1401: The UWB base station establishes a first coordinate system, where the first coordinate system is a spatial coordinate system established by using the UWB base station as a coordinate origin.

In some embodiments, the UWB base station may be deployed on a wall in a room, on the large screen, or at another position in a room.

S1402: The UWB base station determines first coordinates, where the first coordinates are coordinates of the remote control in the first coordinate system.

S1403: The UWB base station sends the first coordinates to the remote control.

In some embodiments, the UWB base station includes a UWB module, and the remote control also includes a UWB module. The UWB base station and the remote control implement communication through their UWB modules, that is, the UWB module of the remote control receives the first coordinates sent by the UWB module of the UWB base station.

S1404: The remote control establishes a second coordinate system, where the second coordinate system is a spatial coordinate system that uses a center of the remote control as a coordinate origin.

It should be understood that S1401 to S1404 have been completed after the UWB base station is installed, and this process may be understood as preparatory operations for performing the following S1405 to S1410.

S1405: The remote control determines a position and a posture of the remote control in real time based on the first coordinates, then determines a posture yaw angle variation (Δψ) and a posture pitch angle variation (Δφ) of the remote control corresponding to a current frame, and determines a distance that is between the remote control and the large screen and that corresponds to the current frame.

A posture yaw angle and a posture pitch angle of the remote control are described in detail in subsequent embodiments.

In some embodiments, the remote control determines, based on the first coordinate system and the second coordinate system, a spatial relationship of the remote control relative to the large screen in real time based on the first coordinates and a position of the large screen in the first coordinate system. The spatial relationship of the remote control relative to the large screen includes the distance between the remote control and the large screen, a pointing position of the remote control on the large screen, a posture of the remote control, and the like.

In some embodiments, a sensor module is disposed in the remote control. The sensor module includes a gyroscope sensor and an acceleration sensor. The remote control may calculate a posture variation of the remote control in real time by using the gyroscope sensor, where the posture variation may specifically include a yaw angle variation (Δψ), a pitch angle variation (Δφ), and a roll angle variation (Δθ), and perform fusion filtering on the posture variation and the remote control posture measured by the UWB base station to obtain a more accurate posture of the remote control. The acceleration sensor in the remote control may obtain a position variation of the remote control through double integration, and perform fusion filtering on the position variation of the remote control and a value of positioning measurement performed by the UWB base station on the remote control, to obtain a more accurate position of the remote control. Therefore, measurement results of the UWB base station and the sensor module may be fused by using a Kalman filter or the like to obtain an accurate posture and position of the remote control in the UWB coordinate system (that is, the foregoing first coordinate system).

S1406: The remote control determines an x variable and a y variable that correspond to the current frame.

The x variable is a variation of a pointing coordinate corresponding to the current frame relative to a pointing coordinate corresponding to a previous frame in an X-axis direction, the y variable is a variation of a pointing coordinate corresponding to the current frame relative to a pointing coordinate corresponding to the previous frame in a Y-axis direction, and the pointing coordinates are coordinates of an intersection point between a direction pointed to by the remote control and the large screen.

In an example, in the previous frame, coordinates that the remote control points to on the large screen are (x1, y1), and in the current frame, coordinates that the remote control points to on the large screen are (x2, y2). In this case, the x variable corresponding to the current frame is x2-x1, and the y variable corresponding to the current frame is y2-y1.

Specifically, a pointing position of the remote control corresponding to the previous frame on the large screen and a pointing position of the remote control corresponding to the current frame on the large screen are determined based on the spatial relationship that is of the remote control relative to the large screen and that is determined in real time in S1405, and further, the x variable and the y variable that correspond to the current frame are determined.

S1407: The remote control adjusts a variation of a cursor in the X-axis direction based on the posture yaw angle variation of the remote control and the distance between the remote control and the large screen; and adjusts a variation of the cursor in the Y-axis direction based on the posture pitch angle variation of the remote control and the distance between the remote control and the large screen.

In some embodiments, a first damping coefficient is determined based on the posture yaw angle variation of the remote control and the distance between the remote control and the large screen; a second damping coefficient is determined based on the posture pitch angle variation of the remote control and the distance between the remote control and the large screen; and the variation of the cursor in the X-axis direction (that is, a variation of a lateral coordinate) is adjusted based on the first damping coefficient, and the variation of the cursor in the Y-axis direction (that is, a variation of a longitudinal coordinate) is adjusted based on the second damping coefficient.

In some embodiments, formulas for adjusting the variation of the cursor in the X-axis direction and the variation of the cursor in the Y-axis direction are as follows: $Δ {x}_{d} = B \left(Δψ, d\right) ∗ Δ {x}_{r}$ $Δ {y}_{d} = B \left(Δφ, d\right) ∗ Δ {y}_{r}$

In the formulas, Δ*x_{d}* represents an adjusted variation of the cursor corresponding to the current frame in the X-axis direction, *B*(Δψ,d) represents a function for calculating the first damping coefficient, d represents a distance that is between the remote control and the large screen and that corresponds to the current frame, and Δ*xᵣ* represents the x variable corresponding to the current frame; and Δ*y_{d}* represents an adjusted variation of the cursor corresponding to the current frame in the Y-axis direction, *B*(Δφ,d) represents a function for calculating the second damping coefficient, d represents the distance that is between the remote control and the large screen and that corresponds to the current frame, and Δ*yᵣ* represents the y variable corresponding to the current frame.

A value determining rule for the damping coefficient is described in detail in subsequent embodiments.

S1408: The remote control calculates cursor coordinates in the current frame based on the adjusted variation of the cursor in the X-axis direction, the adjusted variation of the cursor in the Y-axis direction, and cursor coordinates in the previous frame.

Specifically, the remote control calculates a lateral coordinate of the cursor coordinates in the current frame based on the adjusted variation of the cursor in the X-axis direction and a lateral coordinate of the cursor coordinates in the previous frame, and calculates a longitudinal coordinate of the cursor coordinates in the current frame based on the adjusted variation of the cursor in the Y-axis direction and a longitudinal coordinate of the cursor coordinates in the previous frame.

S1409: The remote control sends the calculated cursor coordinates in the current frame to the large screen.

S1410: The large screen draws the cursor based on the cursor coordinates in the current frame, and displays the cursor on the screen.

In this embodiment of this application, a spatial relationship between the pointing remote control and the interactive large screen can be sensed in real time by using a space sensing capability of the pointing remote control, and sensitivity of the cursor can be adaptively adjusted based on measured position information of the remote control relative to the large screen. Further, a jitter reduction effect of the cursor can be adaptively adjusted based on the distance between the remote control and the large screen and/or an operating status of the remote control, so that a user can experience cursor movement by a small amplitude without jitter and cursor movement by a large amplitude without delay by using the remote control at any position.

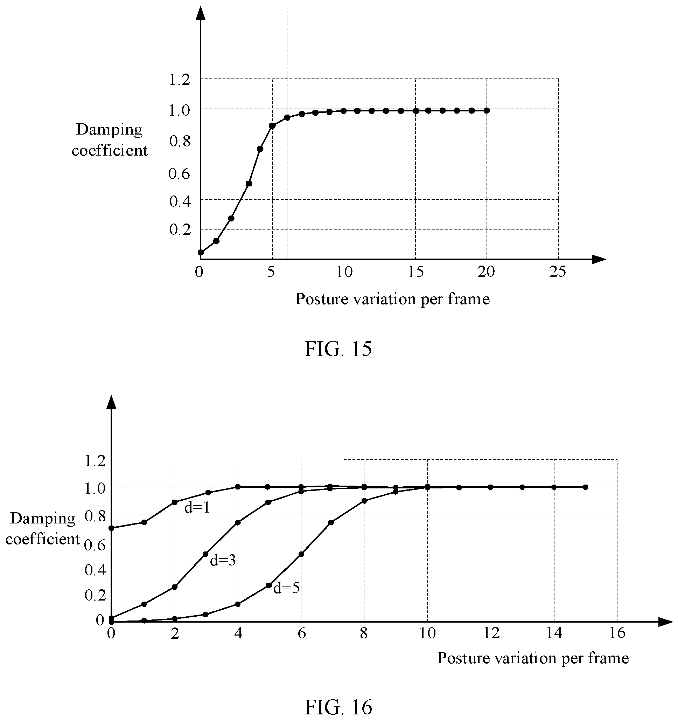

For example, with reference to FIG. 15 and FIG. 16, the following describes an adaptive determining rule for a damping coefficient provided in an embodiment of this application.

FIG. 15 is a curve diagram illustrating a relationship between a damping coefficient and a posture variation per frame when a distance between a remote control and a large screen is fixed.

As shown in FIG. 15, when the distance is fixed, within a range in which a posture variation of the remote control in a current frame is less than a threshold (for example, the threshold may be 7°), the damping coefficient increases with the increase of the posture variation in the current frame. In other words, when a posture change of the remote control in the current frame is slow, a smaller damping coefficient is obtained through calculation based on a filtering function (the foregoing B()), and a coordinate variation of the cursor during movement further decreases. When the posture variation in the current frame is greater than or equal to a threshold, the damping coefficient no longer increases with the increase of the posture variation in the current frame, but remains substantially constant at a value of 1. In other words, when a posture of the remote control in the current frame changes rapidly, a large damping coefficient is obtained through calculation based on the filtering function, so that fast movement of the cursor is not affected. In this way, user experience "with a damping effect in small-range cursor movement and without a damping effect in large-range cursor movement" is achieved.

FIG. 16 is a curve diagram illustrating a relationship between a damping coefficient and a distance from a remote control to a large screen when a posture variation of a remote control per frame is fixed according to an embodiment of this application.

FIG. 16 is a curve diagram illustrating a relationship between the damping coefficient and the posture variation per frame when d=1, a relationship between the damping coefficient and the posture variation per frame when d=3, and a relationship between the damping coefficient and the posture variation per frame when d=5.

It can be learned from FIG. 16 that, when the posture variation in the current frame is the same, a longer distance between the remote control and the large screen indicates a larger damping coefficient. For example, when the distance between the remote control and the large screen is 1, a posture change occurs on the remote control, and a corresponding posture variation in the current frame is 2°, and in this case, the damping coefficient in the current frame is 0.9. When the distance between the remote control and the large screen is changed from 1 to 3, the same posture change occurs on the remote control, and a corresponding posture variation in the current frame is 2°, and in this case, the damping coefficient in the current frame decreases to 0.5. When the distance between the remote control and the large screen is further changed from 3 to 5, the same posture change occurs on the remote control, and a corresponding posture variation in the current frame is 2°, and in this case, the damping coefficient in the current frame further decreases to 0.3.

In other words, as the distance between the remote control and the large screen changes, a damping effect is adjusted accordingly. Given the same posture change per unit time, a longer distance indicates a clearer jitter reduction effect of the cursor.

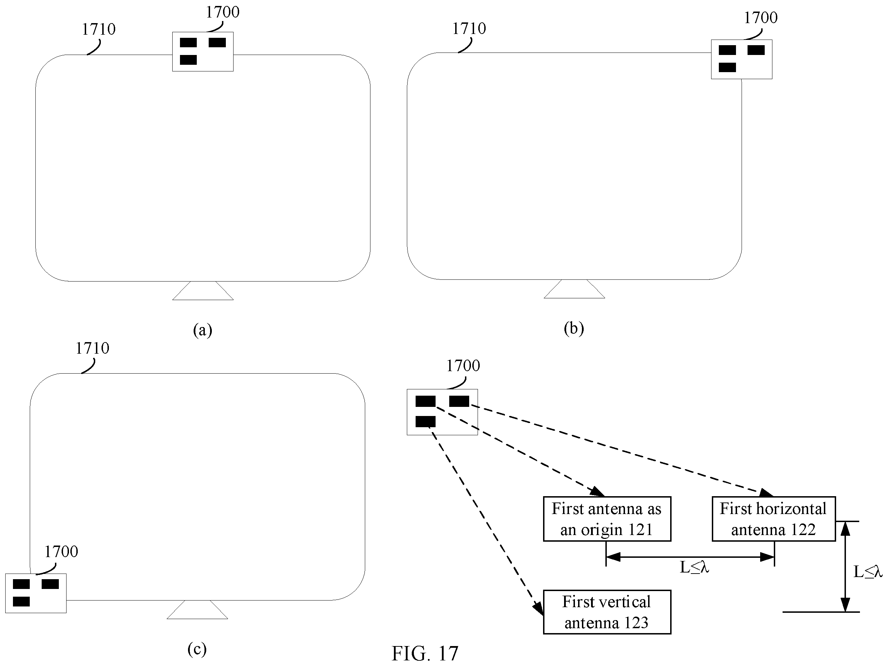

For example, FIG. 17 is a diagram illustrating several position relationships between a large-screen device and a UWB base station, that is, a layout status diagram of a first antenna array 1700 of the UWB base station on a large-screen device 1710.

As shown in FIG. 17, the first antenna array 1700 may be disposed at any position on the large-screen device 1710. For example, the first antenna array 1700 may be disposed outside the large-screen device 1710, for example, disposed on an upper bezel of the large-screen device 1710 (as shown in (a) in FIG. 17), or may be disposed at a diagonal position of the large-screen device 1710 (as shown in (b) in FIG. 17 and (c) in FIG. 17), or may be disposed at any position such as a left bezel, a right bezel, or a lower bezel of the large-screen device 1710, or may be integrated inside the large-screen device 1710, or may be disposed on an object maintaining a distance from the large-screen device 1710. The "object" may be an independent apparatus, for example, a desk or a stand. The large-screen device 1710 and the first antenna array 1700 may be separately disposed on different stands that maintain a distance. Certainly, the first antenna array 1700 may alternatively be disposed inside an electronic device, or the first antenna array 1700 may be disposed at any position in a room in which the large-screen device 1710 is located. This is not limited in this embodiment.

The first antenna array 1700 includes at least three first antenna units. The at least three first antenna units may be a first antenna 121, a second antenna 122, and a third antenna 123. The second antenna 122 is located on one side of the first antenna 121 in a first direction X, and the third antenna 123 is located on one side of the first antenna 121 in a second direction Y.

The first antenna 121 may implement signal sending or receiving, and an origin of a three-dimensional coordinate system may be defined by using the first antenna 121.

In an embodiment, the first antenna 121 is used as the origin of the three-dimensional coordinate system, the first direction is an x-axis direction of the three-dimensional coordinate system, the second direction is a y-axis direction of the three-dimensional coordinate system, the second antenna 122 is located on an x-axis, and the third antenna 123 is located on a y-axis, so that the first antenna 121, the second antenna 122, and the third antenna 123 are arranged in an "L" shape. A distance L between the second antenna 122 and the first antenna 121 and a distance L between the third antenna 123 and the first antenna 121 are both less than or equal to a wavelength λ of a first signal. The first signal is a first signal sent by a second antenna array and received by the first antenna array 1700, and the second antenna array is an antenna array disposed on the remote control.

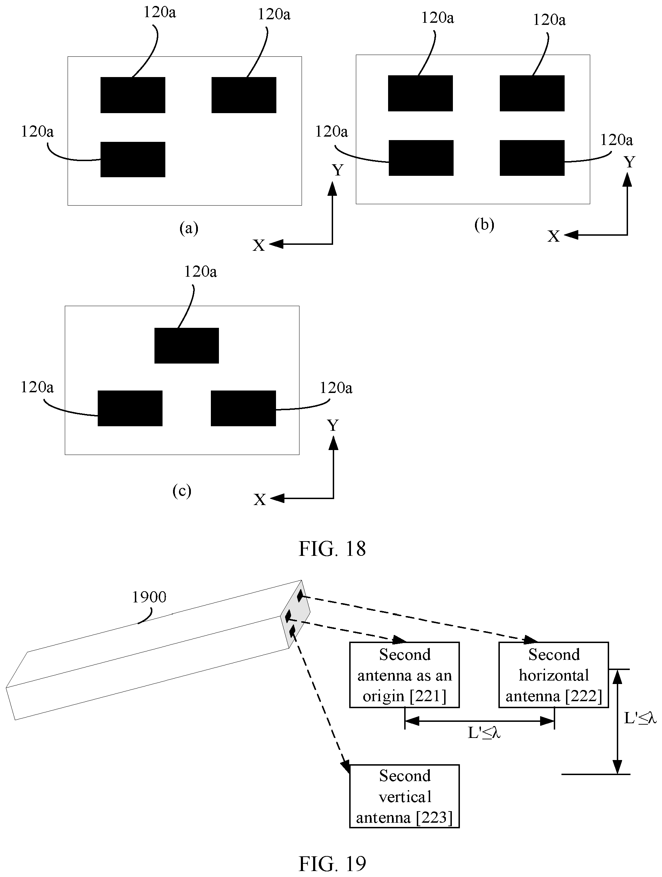

For example, FIG. 18 is a diagram illustrating several layouts of a first antenna array 1700 according to an embodiment of this application.

(a) in FIG. 18 is a layout diagram of the first antenna array 1700. As shown in (a) in FIG. 18, there are three first antenna units 120a, and the three first antenna units 120a are arranged in an "L" shape.

(b) in FIG. 18 is another layout diagram of the first antenna array 1700. As shown in (b) in FIG. 18, there are four first antenna units 120a, and the four first antenna units 120a are arranged in a "square" shape.

(c) in FIG. 18 is another layout diagram of the first antenna array 1700. As shown in (c) in FIG. 18, there are three first antenna units 120a, and the three first antenna units 120a are arranged in a "triangular" shape.

In various layout forms of the at least three first antenna units 120a, at least two antennas are distributed in the first direction X and the second direction Y respectively, and the first direction X is perpendicular to the second direction Y. The first direction X may be used as a lateral axis of the three-dimensional coordinate system, the second direction Y may be used as a longitudinal axis of the three-dimensional coordinate system, and a specified geometric relationship may exist between a plane formed by the first direction X and the second direction Y and a display interface of the large-screen device 1710, thereby facilitating calculation of coordinates of the second antenna array.

For example, FIG. 19 is a layout status diagram of a second antenna array on a remote control 1900 according to an embodiment of this application.

With reference to FIG. 19, the second antenna array includes at least three second antenna units. The at least three second antenna units may be a fourth antenna 221, a fifth antenna 222, and a sixth antenna 223. The fifth antenna 222 is located on one side of the fourth antenna 221 in a third direction, and the sixth antenna 223 is located on one side of the fourth antenna 221 in a fourth direction, so that the fourth antenna 221, the fifth antenna 222, and the sixth antenna 223 form an "L"-shaped structure. The fourth antenna 221 is a transceiver antenna, and both the fifth antenna 222 and the sixth antenna 223 are receive antennas. The second antenna unit in the second antenna array may be configured to receive a second signal sent by the first antenna array 1700. A distance L' between any two second antenna units is set to be less than or equal to a wavelength λ of the second signal, so that the second antenna units configured to receive signals can receive the second signal almost simultaneously, and that each second antenna unit can obtain a phase parameter based on the second signal and obtain a deflection angle based on the phase parameter.

In other words, in this embodiment, a distance between any two first antenna units 120a and a distance between any two second antenna units are set to be less than a wavelength of a corresponding received signal, so that first coordinates and a deflection angle can be obtained based on a phase parameter of the received signal. In this way, positioning of the second antenna array in three-dimensional space can be implemented, and absolute coordinates of the second antenna array within a size range of the large-screen device 1710 can be obtained. This improves positioning accuracy and improves operation experience of the remote control 1900, where the first coordinates are relative coordinates of the second antenna array relative to the first antenna array 1700.

The first antenna array 1700 and the second antenna array may have a same layout form. For example, the first antenna array 1700 includes three first antenna units 120a, the second antenna array includes three second antenna units, and a layout form of the three first antenna units 120a is the same as a layout form of the three second antenna units. Certainly, in some other embodiments, the first antenna array 1700 and the second antenna array may alternatively have different layout forms. For example, the first antenna array 1700 includes three first antenna units 120a, the second antenna array includes two second antenna units, and a layout form of the three first antenna units 120a is different from a layout form of the two second antenna units.

When an operation is performed on the remote control 1900, a distance is generally maintained between the remote control 1900 and the large-screen device 1710, that is, a distance is maintained between the first antenna array 1700 and the second antenna array, so that a triangle is formed between the second antenna array, the first antenna 121, and the second antenna 122, and that a triangle is also formed between the second antenna array, the first antenna 121, and the third antenna 123. Therefore, a value of the first coordinates (x, y, z) may be obtained through calculation based on related principles of triangles and electromagnetic waves.

The first antenna array 1700 is disposed on the large-screen device 1710, and the second antenna array is disposed on the remote control 1900. The first antenna array 1700 can establish a three-dimensional coordinate system based on a relative position of the first antenna array 1700 on the large-screen device 1710. The first antenna array 1700 and the second antenna array are capable of positioning each other, so that coordinates of the second antenna array are accurately presented on a display interface of the large-screen device 1710.

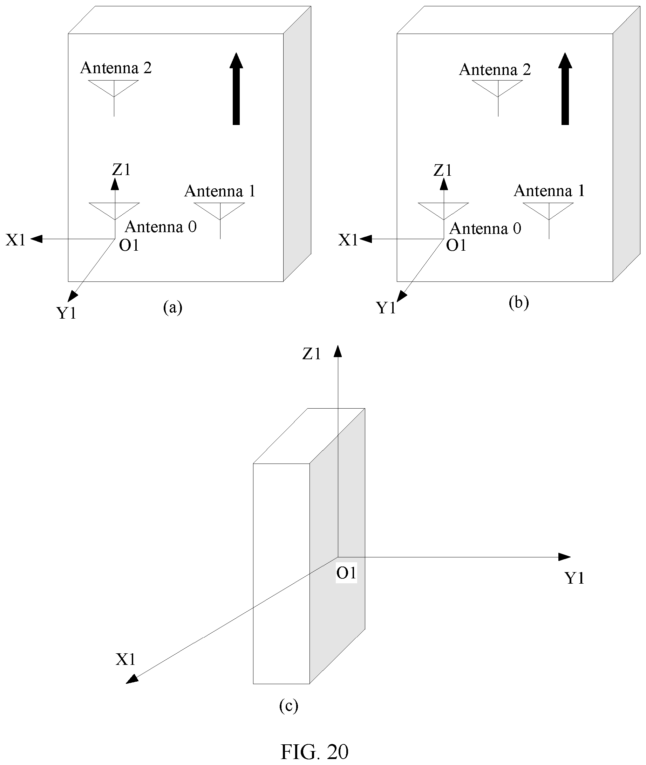

A posture angle is determined by a rotational relationship between a carrier coordinate system (the second coordinate system) and a UWB coordinate system (the first coordinate system), and includes three Euler angles: a yaw angle ψ, a pitch angle φ, and a roll angle θ. To facilitate a clearer understanding of a posture variation of the remote control, the following describes, illustratively with reference to FIG. 20 to FIG. 22, the yaw angle ψ, the pitch angle φ, and the roll angle θ that are used to measure the posture variation of the remote control.

FIG. 20 shows a spatial coordinate system established by using a UWB base station as a coordinate origin, that is, the foregoing first coordinate system.

As shown in (a) in FIG. 20 and (b) in FIG. 20, the UWB base station uses a three-antenna (antenna 0, antenna 1, and antenna 2) structure. The three-antenna structure shown in (a) in FIG. 20 is an L-shaped antenna structure, and the three-antenna structure shown in (b) in FIG. 20 is a triangular antenna structure. When being mounted, the UWB base station needs to be mounted with an arrow shown in the figure perpendicular to a horizontal plane and pointing upward. The UWB base station may be mounted on a wall or integrated on another intelligent device, such as the top of a large screen.

After the UWB base station is mounted, a UWB coordinate system (that is, the foregoing first coordinate system) may be established. As shown in (a) in FIG. 20, the UWB coordinate system may use a center of the antenna 0 of the base station as a coordinate origin O1, an X1 axis is parallel to a bottom edge of the base station and points to the left, a Y1 axis points to a front direction of the base station, and a Z1 axis is perpendicular to an X1O1Y1 plane and upward, and meets the right-hand rule with the X1 axis and the Y1 axis.

(c) in FIG. 20 is a diagram of a UWB coordinate system at a UWB base station level.

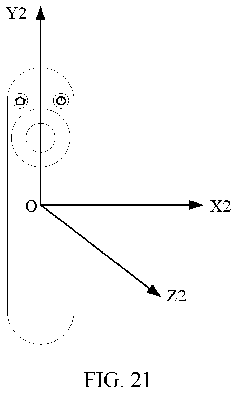

FIG. 21 shows a spatial coordinate system established by using a center of a remote control as a coordinate origin, that is, the foregoing second coordinate system.

As shown in FIG. 21, a coordinate origin O2 of the second coordinate system is located at the center of the remote control, an X2 axis extends to the right along a carrier lateral axis, a Y2 axis extends to the front along a carrier longitudinal axis, a Z2 axis is perpendicular to an X2O2Y2 plane and faces outward, and the coordinate axes meet the right-hand rule.

The remote control may be replaced with any other UWB tag, for example, a mobile phone.

Based on the coordinate systems shown in FIG. 20 and FIG. 21, FIG. 22 is a diagram illustrating a yaw angle ψ, a pitch angle φ, and a roll angle θ that are used to measure a posture of the remote control.

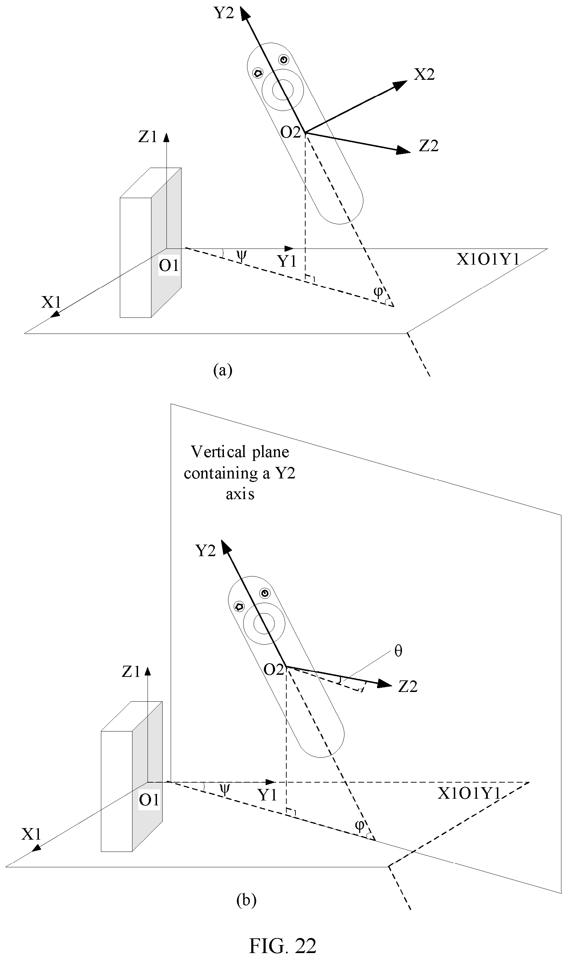

(a) in FIG. 22 is a diagram illustrating a yaw angle ψ and a pitch angle φ.

As shown in (a) in FIG. 22, the pitch angle φ is an included angle between the Y2 axis and the X1O1Y1 plane in the first coordinate system, defined as positive when the carrier nose is up; and the yaw angle ψ is an included angle between a projection of the Y2 axis onto the X1O1Y1 plane and the Y1 axis, defined as positive when the carrier yaws to the right.

(b) in FIG. 22 is a diagram illustrating a roll angle θ.

As shown in (b) in FIG. 22, the roll angle θ is an included angle between the Z2 axis and a vertical plane containing the Y2 axis, defined as positive when the carrier tilts to the right.

In some embodiments, a posture angle between the first coordinate system and the second coordinate system may alternatively be presented by using a rotation matrix C. The posture transformation between the second coordinate system and the first coordinate system is used as an example. ${C}_{2}^{1}$ represents a rotation matrix from the second coordinate system to the first coordinate system, and ${C}_{2}^{1}$ may be obtained through calculation by using the foregoing three posture angles ψ, φ, and θ of the second coordinate system relative to the first coordinate system. The formula is as follows: ${C}_{1}^{2} = \begin{matrix}{cosθ}^{2} {cosψ}^{2} + {sinφ}^{2} {sinθ}^{2} {sinψ}^{2} & {cosφ}^{2} {sinψ}^{2} & {sinθ}^{2} {cosψ}^{2} - {sinφ}^{2} {cosθ}^{2} {sinψ}^{2} \\ - {cosθ}^{2} {sinψ}^{2} + {sinφ}^{2} {sinθ}^{2} {cosψ}^{2} & {cosφ}^{2} {cosψ}^{2} & - {sinθ}^{2} {cosψ}^{2} - {sinφ}^{2} {cosθ}^{2} {cosψ}^{2} \\ - {cosφ}^{2} {sinθ}^{2} & {sinφ}^{2} & - {cosφ}^{2} {cosθ}^{2}\end{matrix}$

It should be noted that a superscript "2" in the foregoing formula (4) refers to the second coordinate system instead of a squaring operation.

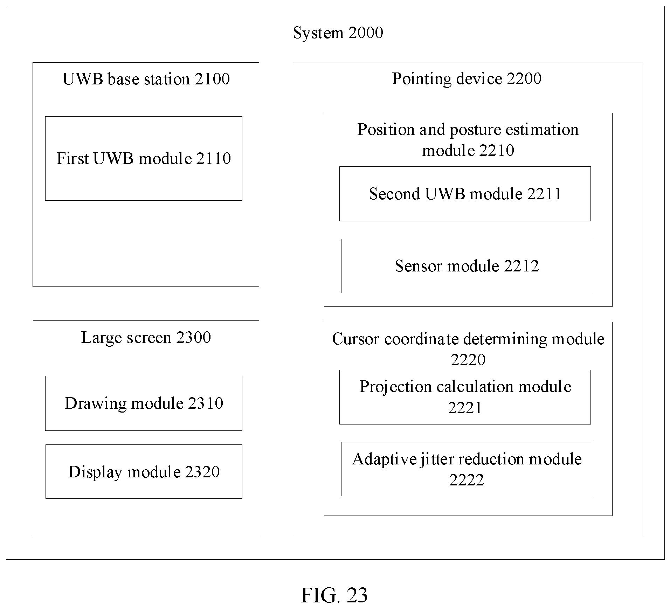

For example, FIG. 23 is a diagram illustrating functional modules of a cursor control system 2000 according to an embodiment of this application.

As shown in FIG. 23, the system 2000 includes a UWB base station 2100, a pointing device 2200, and a large screen 2300. The UWB base station 2100 includes a first UWB module 2110. The pointing device 2200 includes a position and posture estimation module 2210 and a cursor coordinate determining module 2220. The position and posture estimation module 2210 includes a second UWB module 2211 and a sensor module 2212. The cursor coordinate determining module 2220 includes a projection calculation module 2221 and an adaptive jitter reduction module 2222. The large screen 2300 includes a drawing module 2310 and a display module 2320. Specifically,
the first UWB module 2110 is configured to determine first coordinates in real time after the UWB base station 2100 establishes a first coordinate system, where the first coordinate system is a spatial coordinate system established by using the UWB base station 2100 as a coordinate origin, and the first coordinates are coordinates of the pointing device 2200 in the first coordinate system.

In some embodiments, the UWB base station 2100 may be deployed on a wall in a room, on a large screen, or at another position in a room.

The first UWB module 2110 is further configured to send the first coordinates determined in real time to the pointing device 2200.

The position and posture estimation module 2210 is configured to estimate a position and a posture of the pointing device 2200 in real time after the pointing device 2200 establishes a second coordinate system, where the second coordinate system is a spatial coordinate system that uses a center of the pointing device 2200 as a coordinate origin.

Specifically, the second UWB module 2211 is configured to receive the first coordinates sent by the first UWB module 2110 in real time; the sensor module 2212 is configured to determine a posture change of the pointing device 2200 in real time; and the position and posture estimation module 2210 is specifically configured to estimate the position and the posture of the pointing device 2200 in real time based on the first coordinates and the posture change of the pointing device 2200.

The estimated position and posture information of the pointing device 2200 includes a position of the pointing device 2200 away from the large screen, a pointing position of the pointing device 2200 on the large screen, and a posture angle of the pointing device 2200 relative to the first coordinate system (that is, the posture angle is determined by a rotational relationship between the second coordinate system and the first coordinate system), and the posture angle includes three Euler angles: a yaw angle ψ, a pitch angle φ, and a roll angle θ. The yaw angle ψ, the pitch angle φ, and the roll angle θ have been described in detail in the embodiments shown in FIG. 20 to FIG. 22. For brevity, details are not described herein again.

A variation of a posture angle corresponding to a current frame may be determined based on a posture angle of the pointing device 2200 corresponding to a previous frame relative to the first coordinate system and a posture angle of the pointing device 2200 corresponding to the current frame relative to the first coordinate system, that is, a variation Δψ of the yaw angle ψ, a variation Δφ of the pitch angle φ, and a variation Δθ of the roll angle θ corresponding to the current frame may be obtained.

In some embodiments, the sensor module 2212 includes a gyroscope sensor and an acceleration sensor. A posture variation of the remote control may be calculated in real time by using the gyroscope sensor, and fusion filtering may be performed on the posture variation and the posture of the pointing device 2200 measured by the UWB base station 2100, so that a more accurate posture of the pointing device 2200 can be obtained. The acceleration sensor may obtain a position variation of the pointing device 2200 through double integration, and perform fusion filtering on the position variation of the pointing device 2200 and a value of positioning measurement performed by the UWB base station 2100 on the pointing device 2200, to obtain a more accurate position of the pointing device 2200. Therefore, measurement results of the UWB base station 2100 and the sensor module 2212 may be fused by using a Kalman filter or the like to obtain an accurate posture and position of the remote control in the first coordinate system.

The projection calculation module 2221 is configured to determine an x variable and a y variable that correspond to the current frame.

The x variable is a variation of a pointing coordinate corresponding to the current frame relative to a pointing coordinate corresponding to a previous frame in an X-axis direction, the y variable is a variation of a pointing coordinate corresponding to the current frame relative to a pointing coordinate corresponding to the previous frame in a Y-axis direction, and the pointing coordinates are coordinates of an intersection point between a direction pointed to by the pointing device 2200 and the large screen 2300.

In an example, in the previous frame, coordinates that the pointing device 2200 points to on the large screen 2300 are (x1, y1), and in the current frame, coordinates that the pointing device 2200 points to on the large screen 2300 are (x2, y2). In this case, the x variable corresponding to the current frame is x2-x1, and the y variable corresponding to the current frame is y2-y1.

Specifically, the x variable and the y variable that correspond to the current frame are determined based on a pointing position of the pointing device 2200 corresponding to the previous frame on the large screen 2300 and a pointing position of the pointing device 2200 corresponding to the current frame on the large screen 2300.

The adaptive jitter reduction module 2222 is configured to adjust a variation of a cursor in the X-axis direction based on the posture yaw angle variation Δψ of the pointing device 2200 and the distance d between the pointing device 2200 and the large screen 2300; and adjust a variation of the cursor in the Y-axis direction based on the posture pitch angle variation Δφ of the pointing device 2200 and the distance d between the pointing device 2200 and the large screen 2300.

In some embodiments, the adaptive jitter reduction module 2222 determines a first damping coefficient based on the posture yaw angle variation Δψ of the pointing device 2200 and the distance d between the pointing device 2200 and the large screen 2300; determines a second damping coefficient based on the posture pitch angle variation Δφ of the pointing device 2200 and the distance d between the pointing device 2200 and the large screen 2300; and adjusts the variation Δxᵣ of the cursor in the X-axis direction (that is, a variation of a lateral coordinate) based on the first damping coefficient, and adjusts the variation Δyᵣ of the cursor in the Y-axis direction (that is, a variation of a longitudinal coordinate) based on the second damping coefficient.

In some embodiments, formulas for adjusting the variation of the cursor in the X-axis direction and the variation of the cursor in the Y-axis direction by the adaptive jitter reduction module 2222 are as follows: $Δ {x}_{d} = B \left(Δψ, d\right) ∗ Δ {x}_{r}$ $Δ {y}_{d} = B \left(Δφ,d\right) ∗ Δ {y}_{r}$

In the formulas, Δ*x_{d}* represents an adjusted variation of the cursor corresponding to the current frame in the X-axis direction, *B*(Δψ,d) represents a function for calculating the first damping coefficient, d represents a distance that is between the remote control and the large screen and that corresponds to the current frame, and Δ*xᵣ* represents the x variable corresponding to the current frame; and Δ*y_{d}* represents an adjusted variation of the cursor corresponding to the current frame in the Y-axis direction, *B*(Δφ, d) represents a function for calculating the second damping coefficient, d represents the distance that is between the remote control and the large screen and that corresponds to the current frame, and Δ*yᵣ* represents the y variable corresponding to the current frame.

The adaptive jitter reduction module 2222 is further configured to calculate cursor coordinates in the current frame based on the adjusted variation of the cursor in the X-axis direction, the adjusted variation of the cursor in the Y-axis direction, and cursor coordinates in the previous frame.

Specifically, the adaptive jitter reduction module 2222 calculates a lateral coordinate of the cursor coordinates in the current frame based on the adjusted variation of the cursor in the X-axis direction and a lateral coordinate of the cursor coordinates in the previous frame, and calculates a longitudinal coordinate of the cursor coordinates in the current frame based on the adjusted variation of the cursor in the Y-axis direction and a longitudinal coordinate of the cursor coordinates in the previous frame.

The second UWB module 2211 is further configured to send the calculated cursor coordinates in the current frame to the large screen 2300.

The drawing module 2310 is configured to draw the cursor in the current frame based on the cursor coordinates in the current frame.

The display module 2320 is configured to display the cursor in the current frame on a screen of the large screen 2300.

In this embodiment of this application, a spatial relationship between the pointing remote control and the interactive large screen can be sensed in real time by using a space sensing capability of the pointing remote control, and sensitivity of the cursor can be adaptively adjusted based on measured position information of the remote control relative to the large screen. Further, a jitter reduction effect of the cursor can be adaptively adjusted based on the distance between the remote control and the large screen and/or an operating status of the remote control, so that a user can experience cursor movement by a small amplitude without jitter and cursor movement by a large amplitude without delay by using the remote control at any position.

One or more of the modules or units described in this specification may be implemented by software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may include but is not limited to, at least one of the following types: a central processing unit (central processing unit, CPU), a microprocessor, a digital signal processor (DSP), a microcontroller unit (microcontroller unit, MCU), and a computing device used for running software like an artificial intelligence processor. Each computing device may include one or more cores used to execute software instructions to perform operations or processing. The processor may be built in a SoC (system-on-chip) or an application-specific integrated circuit (application-specific integrated circuit, ASIC), or may be an independent semiconductor chip. In addition to the core configured to perform operation or processing by executing software instructions, the processor may further include a necessary hardware accelerator, for example, a field programmable gate array (field programmable gate array, FPGA), a PLD (programmable logic device), or a logic circuit that implements a dedicated logic operation.

When the foregoing modules or units described in this specification are implemented by hardware, the hardware may be any one or any combination of a CPU, a microprocessor, a DSP, an MCU, an artificial intelligence processor, an ASIC, a SoC, an FPGA, a PLD, a dedicated digital circuit, a hardware accelerator, or a non-integrated discrete device. The hardware may run necessary software or may not depend on software to perform the foregoing method procedure.

When the modules or units described in this specification are implemented by software, all or some of the modules or units may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may be aware that units and algorithm steps in the examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A cursor control method, wherein the method comprises:
when a distance between a first pointing device and a first display is a first distance, controlling, by using the first pointing device, a pointing position to move by a first amplitude, so that a cursor synchronously moves on the first display by a second amplitude, wherein the first amplitude is greater than the second amplitude, and the pointing position is a position that the first pointing device points to on the first display; and
when the distance between the first pointing device and the first display is changed to a second distance, controlling, by using the first pointing device, the pointing position to move by a third amplitude, so that the cursor synchronously moves on the first display by the second amplitude, wherein the third amplitude is greater than the first amplitude, and the second distance is greater than the first distance.

2. The method according to claim 1, wherein the method further comprises:
when the pointing position moves on the first display, determining a damping coefficient based on the distance between the first pointing device and the first display, wherein the damping coefficient is negatively correlated with the distance between the first pointing device and the first display; and
adjusting a display position of the cursor based on the damping coefficient.

3. The method according to claim 2, wherein determining the damping coefficient based on the distance between the first pointing device and the first display comprises:
determining, based on a distance corresponding to an i^{th} frame, a damping coefficient corresponding to the i^{th} frame, wherein the distance corresponding to the i^{th} frame is a distance that is between the first pointing device and the first display and that corresponds to the i^{th} frame, i is a natural number, and i=1, 2, 3, ...; and
adjusting the display position of the cursor based on the damping coefficient comprises:
determining an x variable corresponding to the i^{th} frame and a y variable corresponding to the i^{th} frame, wherein the x variable corresponding to the i^{th} frame is a variation of a lateral coordinate of a pointing position corresponding to the i^{th} frame relative to a lateral coordinate of a pointing position corresponding to an (i-1)^{th} frame, and the y variable corresponding to the i^{th} frame is a variation of a longitudinal coordinate of the pointing position corresponding to the i^{th} frame relative to a longitudinal coordinate of the pointing position corresponding to the (i-1)^{th} frame; and
determining, based on the damping coefficient corresponding to the i^{th} frame, cursor coordinates corresponding to the (i-1)^{th} frame, the x variable corresponding to the i^{th} frame, and the y variable corresponding to the i^{th} frame, cursor coordinates corresponding to the i^{th} frame, wherein the cursor coordinates corresponding to the i^{th} frame are used to display the cursor corresponding to the i^{th} frame on the first display.

4. The method according to claim 3, wherein determining, based on the damping coefficient corresponding to the i^{th} frame, the cursor coordinates corresponding to the (i-1)^{th} frame, the x variable corresponding to the i^{th} frame, and the y variable corresponding to the i^{th} frame, the cursor coordinates corresponding to the i^{th} frame comprises:
determining that a sum of a first product and the lateral coordinate of the cursor coordinates corresponding to the (i-1)^{th} frame is the lateral coordinate of the cursor coordinates corresponding to the i^{th} frame, wherein the first product is a product of the damping coefficient corresponding to the i^{th} frame and the x variable corresponding to the i^{th} frame; and
determining that a sum of a second product and the longitudinal coordinate of the cursor coordinates corresponding to the (i-1)^{th} frame is the longitudinal coordinate of the cursor coordinates corresponding to the i^{th} frame, wherein the second product is a product of the damping coefficient corresponding to the i^{th} frame and the y variable corresponding to the i^{th} frame.

5. The method according to any one of claims 2 to 4, wherein determining the damping coefficient based on the distance between the first pointing device and the first display comprises:
determining the damping coefficient based on the distance between the first pointing device and the first display and a posture variation of the first pointing device, wherein the damping coefficient is positively correlated with the posture variation of the first pointing device.

6. The method according to claim 5, wherein determining the damping coefficient based on the distance between the first pointing device and the first display and the posture variation of the first pointing device comprises:
determining, based on the distance corresponding to the i^{th} frame and a first posture variation corresponding to the i^{th} frame, a first damping coefficient corresponding to the i^{th} frame; and
determining, based on the distance corresponding to the i^{th} frame and a second posture variation corresponding to the i^{th} frame, a second damping coefficient corresponding to the i^{th} frame, wherein the distance corresponding to the i^{th} frame is the distance that is between the first pointing device and the first display and that corresponds to the i^{th} frame, i is a natural number, and i=1, 2, 3, ...; and
adjusting the display position of the cursor based on the damping coefficient comprises:
determining the x variable corresponding to the i^{th} frame and the y variable corresponding to the i^{th} frame, wherein the x variable corresponding to the i^{th} frame is the variation of the lateral coordinate of the pointing position corresponding to the i^{th} frame relative to the lateral coordinate of the pointing position corresponding to the (i-1)^{th} frame, and the y variable corresponding to the i^{th} frame is the variation of the longitudinal coordinate of the pointing position corresponding to the i^{th} frame relative to the longitudinal coordinate of the pointing position corresponding to the (i-1)th frame; and
determining, based on the first damping coefficient corresponding to the i^{th} frame, the second damping coefficient corresponding to the i^{th} frame, the cursor coordinates corresponding to the (i-1)^{th} frame, the x variable corresponding to the i^{th} frame, and the y variable corresponding to the i^{th} frame, the cursor coordinates corresponding to the i^{th} frame, wherein the cursor coordinates corresponding to the i^{th} frame are used to display the cursor corresponding to the i^{th} frame on the first display.

7. The method according to claim 6, wherein determining, based on the first damping coefficient corresponding to the i^{th} frame, the second damping coefficient corresponding to the i^{th} frame, the cursor coordinates corresponding to the (i-1)^{th} frame, the x variable corresponding to the i^{th} frame, and the y variable corresponding to the i^{th} frame, the cursor coordinates corresponding to the i^{th} frame comprises:
determining that a sum of a third product and the lateral coordinate of the cursor coordinates corresponding to the (i-1)^{th} frame is the lateral coordinate of the cursor coordinates corresponding to the i^{th} frame, wherein the third product is a product of the first damping coefficient corresponding to the i^{th} frame and the x variable corresponding to the i^{th} frame; and
determining that a sum of a fourth product and the longitudinal coordinate of the cursor coordinates corresponding to the (i-1)^{th} frame is the longitudinal coordinate of the cursor coordinates corresponding to the i^{th} frame, wherein the fourth product is a product of the second damping coefficient corresponding to the i^{th} frame and the y variable corresponding to the i^{th} frame.

8. The method according to claim 6 or 7, wherein the first posture variation corresponding to the i^{th} frame comprises a variation of a yaw angle of the first pointing device relative to a posture corresponding to the (i-1)^{th} frame, and the second posture variation corresponding to the i^{th} frame comprises a variation of a pitch angle of the first pointing device relative to the posture corresponding to the (i-1)^{th} frame.

9. The method according to any one of claims 2 to 8, wherein the method further comprises:
when the pointing position moves on the first display, determining a position and a posture of the first pointing device in real time, wherein the position of the first pointing device is used to obtain the distance between the first pointing device and the first display, and the posture of the first pointing device is used to obtain the posture variation of the first pointing device.

10. The method according to any one of claims 2 to 9, wherein the damping coefficient is greater than 0, and the damping coefficient is less than or equal to 1.

11. The method according to any one of claims 1 to 10, wherein the first pointing device is a remote control.

12. A cursor control method, wherein the method comprises:
when a distance between a first pointing device and a first display is a first distance, in response to controlling, by using the first pointing device, a pointing position to move by a first amplitude, synchronously moving, by a cursor on the first display by a second amplitude, wherein the first amplitude is greater than the second amplitude, and the pointing position is a position that the first pointing device points to on the first display; and
when the distance between the first pointing device and the first display is changed to a second distance, in response to controlling, by using the first pointing device, the pointing position to move by a third amplitude, synchronously moving, by the cursor on the first display by the second amplitude, wherein the third amplitude is greater than the first amplitude, and the second distance is greater than the first distance.

13. A cursor control system, wherein the system comprises a first pointing device and a first display, wherein
the first pointing device is configured to:
when a distance between the first pointing device and the first display is a first distance, control a pointing position to move by a first amplitude, wherein the pointing position is a position that the first pointing device points to on the first display;
the first display is configured to:
in response to the movement of the pointing position by the first amplitude, control a cursor to synchronously move on the first display by a second amplitude, wherein the first amplitude is greater than the second amplitude;
the first pointing device is further configured to: when the distance between the first pointing device and the first display is a second distance, control the pointing position to move by a third amplitude; and
the first display is further configured to:
in response to the movement of the pointing position by the third amplitude, control the cursor to synchronously move on the first display by the second amplitude, wherein the third amplitude is greater than the first amplitude, and the second distance is greater than the first distance.

14. The system according to claim 13, wherein the first pointing device is specifically configured to:
when the pointing position moves on the first display, determine a damping coefficient based on the distance between the first pointing device and the first display, wherein the damping coefficient is negatively correlated with the distance between the first pointing device and the first display; and
adjust a display position of the cursor based on the damping coefficient.

15. The system according to claim 14, wherein the first pointing device is specifically configured to:
determine, based on a distance corresponding to an i^{th} frame, a damping coefficient corresponding to the i^{th} frame, wherein the distance corresponding to the i^{th} frame is a distance that is between the first pointing device and the first display and that corresponds to the i^{th} frame, i is a natural number, and i=1, 2, 3, ...;
determine an x variable corresponding to the i^{th} frame and a y variable corresponding to the i^{th} frame, wherein the x variable corresponding to the i^{th} frame is a variation of a lateral coordinate of a pointing position corresponding to the i^{th} frame relative to a lateral coordinate of a pointing position corresponding to an (i-1)^{th} frame, and the y variable corresponding to the i^{th} frame is a variation of a longitudinal coordinate of the pointing position corresponding to the i^{th} frame relative to a longitudinal coordinate of the pointing position corresponding to the (i-1)^{th} frame; and
determine, based on the damping coefficient corresponding to the i^{th} frame, cursor coordinates corresponding to the (i-1)^{th} frame, the x variable corresponding to the i^{th} frame, and the y variable corresponding to the i^{th} frame, cursor coordinates corresponding to the i^{th} frame; and
the first display is specifically configured to:
display, based on the cursor coordinates corresponding to the i^{th} frame, the cursor corresponding to the i^{th} frame on the first display.

16. The system according to claim 15, wherein the first pointing device is specifically configured to:
determine that a sum of a first product and the lateral coordinate of the cursor coordinates corresponding to the (i-1)^{th} frame is the lateral coordinate of the cursor coordinates corresponding to the i^{th} frame, wherein the first product is a product of the damping coefficient corresponding to the i^{th} frame and the x variable corresponding to the i^{th} frame; and
determine that a sum of a second product and the longitudinal coordinate of the cursor coordinates corresponding to the (i-1)^{th} frame is the longitudinal coordinate of the cursor coordinates corresponding to the i^{th} frame, wherein the second product is a product of the damping coefficient corresponding to the i^{th} frame and the y variable corresponding to the i^{th} frame.

17. The system according to any one of claims 14 to 16, wherein the first pointing device is specifically configured to:
determine the damping coefficient based on the distance between the first pointing device and the first display and a posture variation of the first pointing device, wherein the damping coefficient is positively correlated with the posture variation of the first pointing device.

18. The system according to claim 17, wherein the first pointing device is specifically configured to:
determine, based on the distance corresponding to the i^{th} frame and a first posture variation corresponding to the i^{th} frame, a first damping coefficient corresponding to the i^{th} frame;
determine, based on the distance corresponding to the i^{th} frame and a second posture variation corresponding to the i^{th} frame, a second damping coefficient corresponding to the i^{th} frame, wherein the distance corresponding to the i^{th} frame is the distance that is between the first pointing device and the first display and that corresponds to the i^{th} frame, i is a natural number, and i=1, 2, 3, ...;
determine the x variable corresponding to the i^{th} frame and the y variable corresponding to the i^{th} frame, wherein the x variable corresponding to the i^{th} frame is the variation of the lateral coordinate of the pointing position corresponding to the i^{th} frame relative to the lateral coordinate of the pointing position corresponding to the (i-1)^{th} frame, and the y variable corresponding to the i^{th} frame is the variation of the longitudinal coordinate of the pointing position corresponding to the i^{th} frame relative to the longitudinal coordinate of the pointing position corresponding to the (i-1)th frame; and
determine, based on the first damping coefficient corresponding to the i^{th} frame, the second damping coefficient corresponding to the i^{th} frame, the cursor coordinates corresponding to the (i-1)^{th} frame, the x variable corresponding to the i^{th} frame, and the y variable corresponding to the i^{th} frame, the cursor coordinates corresponding to the i^{th} frame; and
the first display is specifically configured to:
display, based on the cursor coordinates corresponding to the i^{th} frame, the cursor corresponding to the i^{th} frame on the first display.

19. The system according to claim 18, wherein the first pointing device is specifically configured to:
determine that a sum of a third product and the lateral coordinate of the cursor coordinates corresponding to the (i-1)^{th} frame is the lateral coordinate of the cursor coordinates corresponding to the i^{th} frame, wherein the third product is a product of the first damping coefficient corresponding to the i^{th} frame and the x variable corresponding to the i^{th} frame; and
determine that a sum of a fourth product and the longitudinal coordinate of the cursor coordinates corresponding to the (i-1)^{th} frame is the longitudinal coordinate of the cursor coordinates corresponding to the i^{th} frame, wherein the fourth product is a product of the second damping coefficient corresponding to the i^{th} frame and the y variable corresponding to the i^{th} frame.

20. The system according to claim 18 or 19, wherein the first posture variation corresponding to the i^{th} frame comprises a variation of a yaw angle of the first pointing device relative to a posture corresponding to the (i-1)^{th} frame, and the second posture variation corresponding to the i^{th} frame comprises a variation of a pitch angle of the first pointing device relative to the posture corresponding to the (i-1)^{th} frame.

21. The system according to any one of claims 14 to 20, wherein the first pointing device is specifically configured to:
when the pointing position moves on the first display, determine a position and a posture of the first pointing device in real time, wherein the position of the first pointing device is used to obtain the distance between the first pointing device and the first display, and the posture of the first pointing device is used to obtain the posture variation of the first pointing device.

22. The system according to any one of claims 14 to 21, wherein the damping coefficient is greater than 0, and the damping coefficient is less than or equal to 1.

23. The system according to any one of claims 13 to 22, wherein the first pointing device is a remote control, and the first display is a large screen.

24. An electronic device, comprising:
one or more processors;
one or more memories; and
one or more computer programs, wherein the one or more computer programs are stored in the one or more memories, the one or more computer programs comprise instructions, and when the instructions are executed by the one or more processors, the electronic device is enabled to perform the method according to any one of claims 1 to 11 or perform the method according to claim 12.

25. A computer-readable storage medium, wherein the storage medium stores a program or instructions, and when the program or the instructions are run, the method according to any one of claims 1 to 11 is implemented, or the method according to claim 12 is implemented.

26. A chip, wherein the chip stores instructions, and when the instructions are run, the method according to any one of claims 1 to 11 is implemented, or the method according to claim 12 is implemented.

27. A computer program product, wherein the computer program product stores a program or instructions, and when the program or the instructions are run, the method according to any one of claims 1 to 11 is implemented, or the method according to claim 12 is implemented.
